# EUROPEAN PATENT APPLICATION

(11) **EP 3 578 397 A1**
(43) Date of publication of application: **11.12.2019**
(21) Application number: 19175156.9
(22) Date of filing: 17.05.2019
(51) Int. Cl.: B60H 1/00

(54) **AIR CONDITIONNING SYSTEM FOR VEHICLE**

(30) Priority: 06.06.2018 JP 2018108413
(71) Applicant: Valeo Japan Co., Ltd., Kumagaya-shi, Saitama 360-0193 (JP)
(72) Inventor: ARAKI, Daisuke, SAITAMA, 360-0193 (JP); HAYASHI, Naoto, SAITAMA, 360-0193 (JP)
(74) Representative: Metz, Gaëlle

(57) **Abstract**

A vent door is constituted of: a rotary shaft which is pivotally supported in an air conditioning case; a center vent' s opening and closing part which is designed to be capable of opening and closing a center vent opening; and a side vent' s opening and closing part which is designed to be capable of opening and closing a side vent opening. In at least one of: a downstream end of a center vent blowout part or a connection end part of a center vent connecting duct which is connected to the center vent blowout part; and a downstream end of a side vent blowout part or a connection end part of a side vent connecting duct which is connected to the side vent blowout part, a vent air volume restriction wall which is designed to narrow down a gap between itself and the corresponding opening and closing part across a predetermined turning area is provided.

## Description

### BACKGROUND OF THE INVENTION

### 1. Field of the Invention

The present invention relates to an air conditioning system for a vehicle that includes a center vent blowout part and a side vent blowout part and is capable of opening and closing these blowout parts with a vent door, and particularly relates to an air conditioning system for a vehicle that is capable of changing the distribution of the volume of air to be delivered from the center vent blowout part and the volume of air to be delivered from the side vent blowout part.

### 2. Description of the Related Art

An air conditioning system for a vehicle in which a vent blowout part that is designed to deliver conditioned air directed toward the upper body of an occupant in a vehicle is sectioned in the lateral direction of a vehicle and divided into a center vent blowout part and a side vent blowout part, and the volumes of air to be delivered from these center vent blowout part and side vent blowout part can be regulated is publicly known in literatures such as Patent Literature 1 below.

This air conditioning system for a vehicle including: a foot blowout part (foot opening part) which is connected to a foot blowout port designed to blow out air-conditioned air toward the feet of an occupant in the vehicle compartment; a center vent blowout part (center face opening part) which is connected to a center face blowout port designed to blow out air-conditioned air from a central part of the vehicle compartment toward a head part of the occupant; and a side vent blowout part (side face opening part) which is connected to a side face blowout port designed to blow out air-conditioned air from both left and right end parts of the vehicle compartment toward the head part of the occupant or toward windows on the side faces of the vehicle is provided with: a face door which is designed to open and close the center vent blowout part and the side vent blowout part; and a foot door which is designed to open and close the foot blowout part, the face door is provided with an opening part which communicates with the side vent blowout part when the face door closes the center vent blowout part and the side vent blowout part, and the opening degree of this opening part can be adjusted by the foot door.

Accordingly, in such a configuration, the volume of air to blow out of the center vent blowout part and the volume of air to blow out of the side vent blowout part can be changed by the door position setting as described below.
(1) In the case of increasing both the volume of air to blow out of the center vent blowout part and the volume of air to blow out of the side vent blowout part, set both the face door and the foot door at their open positions.
(2) In the case of stopping the volume of air to blow out of the center vent blowout part and increasing the volume of air to blow out of the side vent blowout part, fully close the center vent blowout part and the side vent blowout part with the face door and set the foot door at its open position.
(3) In the case of stopping the volume of air to blow out of the center vent blowout part and reducing the volume of air to blow out of the side vent blowout part, fully close the center vent blowout part and the side vent blowout part with the face door, open the foot opening part with the foot door, and narrow down the aperture of the opening part of the face door with a part of the foot door.

Patent Literature 1: JP-A-2001-191782

However, in the above configuration, the two doors (the face door and the foot door) to which rotational power is applied separately are needed in order to regulate the volume of air to blow out of the center vent blowout part (center vent air volume) and the volume of air to blow out of the side vent blowout part (side vent air volume) . Besides, since the volume of air to blow out of the side vent blowout part is regulated by adjusting how the two doors overlap with each other, the foot door needs to be disposed adjacent to the face door, which causes inconvenience of restriction in the freedom of door layout.

In addition, the above configuration causes inconvenience of not being able to fully meet a request to change the ratio between the center vent air volume and the side vent air volume.

Specifically, in the above configuration, the center vent air volume and the side vent air volume can be changed by switching the operations of (1) to (3) above as needed; however, no air is output from the center vent blowout part in the case of changing the side vent air volume, and therefore it is not possible to change the distribution of the center vent air volume and the side vent air volume while achieving both of these air volumes.

For this reason, for example, it is not possible to meet requests such as a request to increase only cold air from the side vent blowout part, occurring when the incident angle of the sunshine shining into the vehicle compartment is so small that a person on the sides of the vehicle feels hot, and a request to make the volume of air to blow out of the center vent blowout part larger than the volume of air to blow out of the side vent blowout part occurring when a cooling effect needs to be achieved early by allowing cold air to reach the rear of the vehicle compartment in order to cool the vehicle compartment quickly.

The present invention has been made in consideration of the aforementioned circumstances, and the main challenge thereof is to provide an air conditioning system for a vehicle which is capable of regulating the volume of air to blow out of a center vent blowout part and the volume of air to blow out of a side vent blowout part by manipulation of one vent door only, and which is capable of changing the distribution of the volume of air to blow out of the center vent blowout part and the volume of air to blow out of the side vent blowout part while achieving both of the volumes of air to blow out of these vent blowout parts.

### SUMMARY OF THE INVENTION

In order to achieve the above challenge, an air conditioning system for a vehicle according to the present invention is an air conditioning system for a vehicle including: an air conditioning case in which an air flow passage is formed; a temperature adjustment unit which is disposed in the air conditioning case and configured to adjust a temperature of air introduced into the air conditioning case; a center vent blowout part which is disposed downstream of the temperature adjustment unit, which is connected to a center vent connecting duct that is designed to guide air to a center vent blowout grille provided close to the center in a vehicle widthwise direction, and in which a center vent opening that is designed to deliver air to the center vent connecting duct is formed; a side vent blowout part which is adjacent to the center vent blowout part, which is connected to a side vent connecting duct that is designed to guide air to a side vent blowout grille provided close to sides in the vehicle widthwise direction, and in which a side vent opening that is designed to deliver air to the side vent connecting duct is formed; and a vent door which is supported in the air conditioning case in such a manner as to be capable of opening and closing the center vent opening and the side vent opening, the air conditioning system for a vehicle being characterized in that
the vent door includes: a rotary shaft which is pivotally supported in the air conditioning case; a center vent' s opening and closing part which is constituted of multiple platy parts that extend in different radial directions from the rotary shaft and which is designed to be capable of opening and closing the center vent opening; and a side vent's opening and closing part which is constituted of multiple platy parts that extend in different radial directions from a portion of the rotary shaft different from that where the center vent's opening and closing part is formed and which is designed to be capable of opening and closing the side vent opening, and, in at least one of: a downstream end of the center vent blowout part or a connection end part of the center vent connecting duct which is connected to the center vent blowout part; and a downstream end of the side vent blowout part or a connection end part of the side vent connecting duct which is connected to the side vent blowout part, a vent air volume restriction wall which is formed to curve along a rotation trajectory of the corresponding opening and closing part and designed to narrow down a gap between itself and the opening and closing part across a predetermined turning area is provided.

Accordingly, since the vent air volume restriction wall is provided in at least one of: the downstream end of the center vent blowout part or the connection end part of the center vent connecting duct which is connected to the center vent blowout part; and the downstream end of the side vent blowout part or the connection end part of the side vent connecting duct which is connected to the side vent blowout part, when the opening and closing part comes close to the vent air volume restriction wall, the passage area of a portion between the opening and closing part and the vent air volume restriction wall is narrowed down, thus making it possible to reduce the volume of air to be delivered from the corresponding opening (blowout part).

Thereby, even in the case of using one vent door (the vent door having the center vent's opening and closing part and the side vent's opening and closing part on one rotary shaft), the vent air volume restriction wall makes it possible to regulate the ratio between the volume of air to be delivered from the center vent blowout part (center vent air volume) and the volume of air to be delivered from the side vent blowout part (side vent air volume) while achieving both the center vent air volume and the side vent air volume.

Here, various modes of the vent air volume restriction wall are conceivable. For example, the vent air volume restriction wall may be constituted of at least one of: a center vent's extension part which extends along the rotation trajectory of the center vent's opening and closing part from an edge part of the center vent opening located at the downstream end of the center vent blowout part; and a side vent's extension part which extends along the rotation trajectory of the side vent's opening and closing part from an edge part of the side vent opening located at the downstream end of the side vent blowout part.

According to such a configuration, since the vent air volume restriction wall is constituted of at least one of: the center vent' s extension part which extends from the downstream end edge part of the center vent opening; and the side vent's extension part which extends from the downstream end edge part of the side vent opening, when the vent door rotates until the end side of the center vent's opening and closing part rotates to the position of the center vent's extension part or until the end side of the side vent's opening and closing part rotates to the position of the side vent's extension part, the passage area of a portion between the end side of the opening and closing part and the extension part is reduced, thus making it possible to reduce the volume of air to be delivered from the corresponding opening. Accordingly, by providing at least one of the center vent's extension part and the side vent's extension part, it is possible to change the ratio between the volume of air to be delivered from the center vent blowout part and the volume of air to be delivered from the side vent blowout part with the turning of the vent door.

Note that, it is preferable that, in the case where the center vent' s extension part and the side vent' s extension part are arranged, the center vent's extension part and the side vent's extension part are arranged in different turning areas in a rotation direction of the rotary shaft.

According to such a configuration, a large change in the distribution of the volume of air to be delivered from the center vent blow out part and the volume of air to be delivered from the side vent blowout part can be implemented easily by changing the position of the vent door in its rotation direction.

Meanwhile, the vent air volume restriction wall may be constituted of at least one of: a center vent' s curve wall which is formed in an inner wall of the connection end part of the center vent connecting duct, which is connected to the center vent blowout part, along the rotation trajectory of the center vent's opening and closing part; and a side vent's curve wall which is formed in an inner wall of the connection end part of the side vent connecting duct, which is connected to the side vent blowout part, along the rotation trajectory of the side vent's opening and closing part.

According to such a configuration, since the vent air volume restriction wall is constituted of at least one of: the center vent's curve wall which is formed in the inner wall of the connection end part of the center vent connecting duct; and the side vent's curve wall which is formed in the inner wall of the connection end part of the side vent connecting duct, when the vent door rotates until the end side of the center vent's opening and closing part rotates to the position of the center vent' s curve wall or until the end side of the side vent' s opening and closing part rotates to the position of the side vent's curve wall, the passage area of a portion between the end side of the opening and closing part and the curve wall is reduced, thus making it possible to reduce the volume of air to be delivered from the corresponding opening. In addition, by forming the vent air volume restriction wall not in the air conditioning case but in the connecting duct that guides air to the blowout grille, it is possible to largely change the distribution of the volume of air to be guided to the center vent blowout grille and the volume of air to be guided to the side vent blowout grille by simply replacing the connecting duct.

In such a configuration, it is also preferable that, in the case where the center vent' s curve wall and the side vent' s curve wall are arranged, the center vent's curve wall and the side vent's curve wall are arranged in different turning areas in a rotation direction of the rotary shaft.

According to such a configuration, a large change in the distribution of the volume of air to be guided to the center vent blowout grille and the volume of air to be guided to the side vent blowout grille can be implemented easily by changing the position of the vent door in its rotation direction.

The above configuration is one in which the distribution of the volume of air to the center vent blowout part and the volume of air to the side vent blowout part is changed by providing the vent air volume restriction wall in at least one of: the downstream end of the center vent blowout part or the connection end part of the center vent connecting duct which is connected to the center vent blowout part; and the downstream end of the side vent blowout part or the connection end part of the side vent connecting duct which is connected to the side vent blowout part. Instead, the distribution of the volume of air to the center vent blowout part and the volume of air to the side vent blowout part may be changed by changing the configuration of the vent door itself.

Specifically, an air conditioning system for a vehicle according to the present invention may be an air conditioning system for a vehicle including: an air conditioning case in which an air flow passage is formed; a temperature adjustment unit which is disposed in the air conditioning case and configured to adjust a temperature of air introduced into the air conditioning case; a center vent blowout part which is disposed downstream of the temperature adjustment unit, which is connected to a center vent connecting duct that is designed to guide air to a center vent blowout grille provided close to the center in a vehicle widthwise direction, and in which a center vent opening that is designed to deliver air to the center vent connecting duct is formed; a side vent blowout part which is adjacent to the center vent blowout part, which is connected to a side vent connecting duct that is designed to guide air to a side vent blowout grille provided close to sides in the vehicle widthwise direction, and in which a side vent opening that is designed to deliver air to the side vent connecting duct is formed; and a vent door which is supported in the air conditioning case in such a manner as to be capable of opening and closing the center vent opening and the side vent opening, the air conditioning system for a vehicle being characterized in that
the vent door includes: a rotary shaft which is pivotally supported in the air conditioning case; a center vent' s opening and closing part which is constituted of multiple platy parts that extend in different radial directions from the rotary shaft and which is designed to be capable of opening and closing the center vent opening; and a side vent's opening and closing part which is constituted of multiple platy parts that extend in different radial directions from a portion of the rotary shaft different from that where the center vent's opening and closing part is formed and which is designed to be capable of opening and closing the side vent opening, and the center vent' s opening and closing part and the side vent's opening and closing part extend in different radial directions.

Thus, according to such a configuration, the center vent's opening and closing part and the side vent's opening and closing part extend in different radial directions. Thereby, by regulating the rotation position of the vent door, a mode for increasing the volume of air to be delivered from the center vent opening and a mode for increasing the volume of air to be delivered from the side vent opening can be implemented by different turning areas of the vent door.

Accordingly, even in the case of using one vent door (the vent door having the center vent's opening and closing part and the side vent's opening and closing part on one rotary shaft), it is possible to regulate the ratio between the volume of air to be delivered from the center vent blowout part and the volume of air to be delivered from the side vent blowout part while achieving both the center vent air volume and the side vent air volume.

In each of the configurations described above, various modes are conceivable as the multiple center vent's opening and closing parts and the multiple side vent's opening and closing parts. For example, they may be each constituted of two platy parts which extend in directions different by 180° with respect to the rotary shaft.

Note that, the center vent blowout part may be constituted of a driver seat's center vent blowout part which is designed to deliver air to blow toward an area of a driver seat's side space of a vehicle compartment close to the center in the vehicle compartment, and the side vent blowout part may be constituted of a driver seat's side vent blowout part which is designed to deliver air to blow toward an area of the driver seat's side space close to the sides in the vehicle compartment.

Instead, the center vent blowout part may be constituted of a passenger seat' s center vent blowout part which is designed to deliver air to blow toward an area of a passenger seat's side space of a vehicle compartment close to the center in the vehicle compartment, and the side vent blowout part may be constituted of a passenger seat's side vent blowout part which is designed to deliver air to blow toward an area of the passenger seat's side space close to the sides in the vehicle compartment.

Instead, the center vent blowout part may be constituted of: a driver seat's center vent blowout part which is designed to deliver air to blow toward an area of a driver seat's side space of a vehicle compartment close to the center in the vehicle compartment; and a passenger seat' s center vent blowout part which is designed to deliver air to blow toward an area of a passenger seat's side space of the vehicle compartment close to the center in the vehicle compartment, and the side vent blowout part may be constituted of: a driver seat's side vent blowout part which is designed to deliver air to blow toward an area of the driver seat's side space close to the sides in the vehicle compartment; and a passenger seat's side vent blowout part which is designed to deliver air to blow toward an area of the passenger seat's side space close to the sides in the vehicle compartment.

As has been described, according to the present invention, by providing the vent air volume restriction wall in at least one of: the downstream end of the center vent blowout part or the connection end part of the center vent connecting duct which is connected to the center vent blowout part; and the downstream end of the side vent blowout part or the connection end part of the side vent connecting duct which is connected to the side vent blowout part, or by making the center vent's opening and closing part, which is capable of opening and closing the center vent opening of the vent door, and the side vent's opening and closing part, which is capable of opening and closing the side vent opening of the vent door, extend in different radial directions, it is possible to change the distribution of the volume of air to be delivered from the center vent blowout part and the volume of air to be delivered from the side vent blowout part using one vent door while achieving both of the volumes of air to blow out of these blowout parts.

Thereby, the distribution of the volume of air to be delivered from the center vent blowout part and the volume of air to be delivered from the side vent blowout part can be changed by a small number of parts. In addition, other mode doors can be installed without depending on the installation position of the vent door, which eliminates inconvenience of restriction in the freedom of layout of mode doors.

### BRIEF DESCRIPTION OF THE DRAWINGS

Fig. 1A is a sectional view illustrating an overall configuration example of an air conditioning system for a vehicle according to the present invention, and Fig. 1B is a plan view illustrating a defrost blowout part and a vent blowout part which are arranged in an upper part of an air conditioning case.
Figs. 2A and 2B are views illustrating the relationship between the defrost blowout part and the vent blowout part, which are arranged in the upper part of the air conditioning case, and connecting ducts which are connected to the blowout parts, in which: Fig. 2A is a view illustrating the relationship between a sectional view of the upper part of the air conditioning case and the connecting ducts; and Fig. 2B is a view illustrating the relationship between a plan view of the upper part of the air conditioning case and the connecting ducts.
Fig. 3 is a perspective view of a first embodiment where the vent blowout part on which a vent door is mounted and the vent door mounted on this vent blowout part are represented side by side.
Fig. 4 is a view illustrating how a driver seat side vent door and a passenger seat side vent door formed separately are coupled together and rotatably supported on the air conditioning case.
Figs. 5A and 5B are sectional views illustrating the vent blowout part of the first embodiment, in which: Fig. 5A illustrates a center vent blowout part taken along the line A-A in Fig. 3; and Fig. 5B illustrates a side vent blowout part taken along the line B-B in Fig. 3.
Figs. 6A to 6D are views explaining, for each of blowout modes, the volume of air to be delivered from the center vent blowout part and the volume of air to be delivered from the side vent blowout part in the configuration of the first embodiment.
Fig. 7A is a view illustrating how air blows out in a vehicle compartment in the blowout mode of Fig. 6C, and Fig. 7B is a view illustrating how air blows out in the vehicle compartment in the blowout mode of Fig. 6D.
Fig. 8 is a view illustrating a modification example having the same function as the configuration of Fig. 5A.
Fig. 9 is a perspective view of a second embodiment where the vent blowout part on which the vent door is mounted and the vent door mounted on this vent blowout part are represented side by side.
Figs. 10A and 10B are sectional views illustrating the vent blowout part of the second embodiment, in which: Fig. 10A illustrates the center vent blowout part taken along the line A-A in Fig. 9; and Fig. 10B illustrates the side vent blowout part taken along the line B-B in Fig. 9.
Figs . 11A to 11D are views explaining, for each of blowout modes, the volume of air to be delivered from the center vent blowout part and the volume of air to be delivered from the side vent blowout part in the configuration of the second embodiment.
Fig. 12A is a view illustrating how air blows out in the vehicle compartment in the blowout mode of Fig. 11C, and Fig. 12B is a view illustrating how air blows out in the vehicle compartment in the blowout mode of Fig. 11D.
Fig. 13 is a view illustrating a modification example having the same function as the configuration of Fig. 10B.
Fig. 14 is a perspective view of a third embodiment where the vent blowout part on which the vent door is mounted and the vent door mounted on this vent blowout part are represented side by side.
Figs. 15A and 15B are sectional views illustrating the vent blowout part of the third embodiment, in which: Fig. 15A illustrates the center vent blowout part taken along the line A-A in Fig. 14; and Fig. 15B illustrates the side vent blowout part taken along the line B-B in Fig. 14.
Figs. 16A to 16D are views explaining, for each of blowout modes, the volume of air to be delivered from the center vent blowout part and the volume of air to be delivered from the side vent blowout part in the configuration of the third embodiment.
Fig. 17A is a view illustrating how air blows out in the vehicle compartment in the blowout mode of Fig. 16C, and Fig. 17B is a view illustrating how air blows out in the vehicle compartment in the blowout mode of Fig. 16D.
Fig. 18 is a view illustrating a modification example having the same function as the configuration of Figs. 15A and 15B.
Fig. 19 is a perspective view of a fourth embodiment where the vent blowout part on which the vent door is mounted and the vent door mounted on this vent blowout part are represented side by side.
Figs. 20A and 20B are sectional views illustrating the vent blowout part of the fourth embodiment, in which: Fig. 20A illustrates the center vent blowout part taken along the line A-A in Fig. 19; and Fig. 20B illustrates the side vent blowout part taken along the line B-B in Fig. 19.
Figs . 21A to 21D are views explaining, for each of blowout modes, the volume of air to be delivered from the center vent blowout part and the volume of air to be delivered from the side vent blowout part in the configuration of the fourth embodiment.
Fig. 22A is a view illustrating how air blows out in the vehicle compartment in the blowout mode of Fig. 21C, and Fig. 22B is a view illustrating how air blows out in the vehicle compartment in the blowout mode of Fig. 21D.
Fig. 23 is a perspective view of a fifth embodiment where the vent blowout part on which the vent door is mounted and the vent door mounted on this vent blowout part are represented side by side.
Fig. 24A is a view illustrating, using the configuration of Fig. 23, how air blows out in the vehicle compartment in a blowout mode for increasing the volume of air from the center vents, and Fig. 24B is a view illustrating, using the configuration of Fig. 23, how air blows out in the vehicle compartment in a blowout mode for increasing the volume of air from the side vents.
Fig. 25 is a perspective view of a sixth embodiment where the vent blowout part on which the vent door is mounted and the vent door mounted on this vent blowout part are represented side by side.
Fig. 26A is a view illustrating, using the configuration of Fig. 25, how air blows out in the vehicle compartment in a blowout mode for increasing the volume of air from the center vents, and Fig. 26B is a view illustrating, using the configuration of Fig. 25, how air blows out in the vehicle compartment in a blowout mode for increasing the volume of air from the side vents.

### DESCRIPTION OF THE PREFERRED EMBODIMENTS

Hereinbelow, embodiments of this invention are described using the drawings.

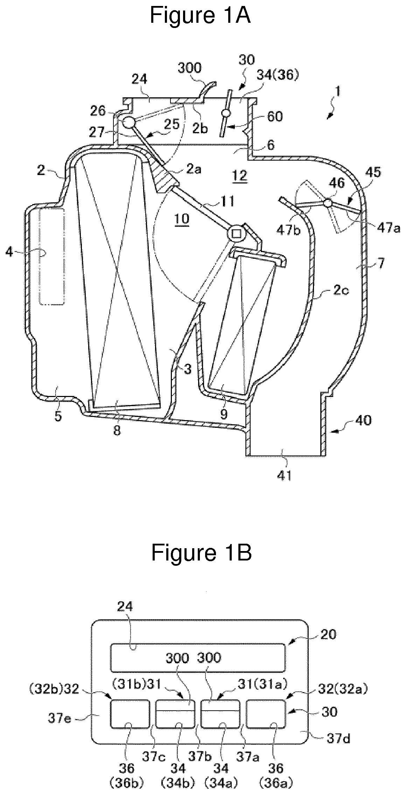

Fig. 1 illustrates an air conditioning unit 1 of a center-placed air conditioning system for a vehicle which is mounted in a center console part of the vehicle. This air conditioning unit 1 is placed closer to a vehicle compartment than a partition board that partitions an engine room and the vehicle compartment, and is designed so that external air (outside-compartment air) and/or internal air (inside-compartment air) may be introduced into an air conditioning case 2 via a blower unit (not illustrated).

The air conditioning case 2 forms a passage of air to flow toward the vehicle compartment (air flow passage 3), is molded by a synthetic resin material, and includes: an air introduction space 5 that is designed to introduce air from the blower unit via an air introduction port 4; a first blowout passage 6 that is designed to introduce air to an upper part of the case 2; and a second blowout passage 7 that is designed to introduce air to a lower part of the case 2.

In the air conditioning case 2, an evaporator 8 acting as a cooling heat exchanger is disposed downstream of the air introduction space 5, and a heater core 9 acting as a heating heat exchanger is disposed downstream of this evaporator 8.

The evaporator 8 constitutes a part of a refrigeration cycle, stands in the air passage so that all air introduced through the air introduction port 4 may pass therethrough, and is capable of cooling, as needed, the air passing therethrough. Meanwhile, the heater core 9 stands in a lower portion of the air conditioning case 2 which is located downstream of the evaporator 8.

In the air conditioning case, a bypass passage 10 that is designed to introduce the air having passed through the evaporator 8 downward while letting it bypass the heater core 9 is formed. An air mix door 11 that is pivotally supported at a portion above and upstream of the heater core 9 is designed to regulate the ratio between air to pass through this bypass passage 10 and air to pass through the heater core 9.

Thereby, the evaporator 8, the heater core 9, and the air mix door 11 described above form a temperature regulation unit that regulates the temperature of air introduced into the air conditioning case 2.

A mixing area 12 to mix air having passed though the bypass passage 10 and air having passed through the heater core 9 is formed downstream of the air mix door 11, and the first blowout passage 6 and the second blowout passage 7 are connected to this mixing area 12.

At the downstream end of the first blowout passage 6, a defrost blowout part 20 that is provided on an upper front side of the air conditioning case 2 and designed to draw air to be delivered toward a windshield of the vehicle and a vent blowout part 30 that is provided on an upper rear side of the air conditioning case 2 and designed to draw air to be delivered toward an upper side of the vehicle compartment are formed. In addition, at the downstream end of the second blowout passage 7, a foot blowout part 40 that is provided on a lower rear side of the air conditioning case 2 and designed to draw air to be delivered toward a lower part of the vehicle compartment is formed.

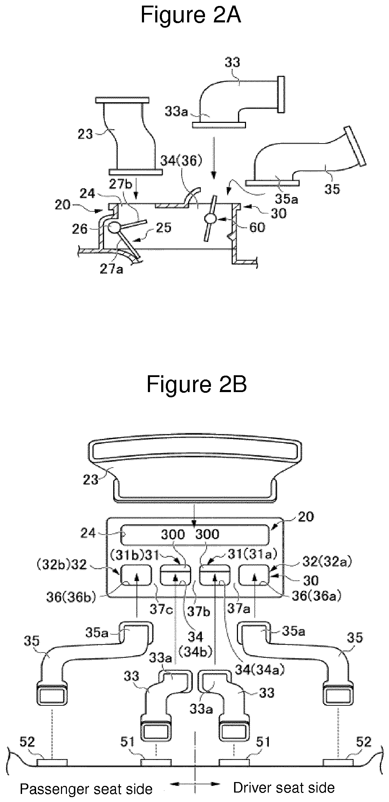

Here, as illustrated in Fig. 1B and Fig. 2B, the vent blowout part 30 is provided on each of the driver seat side and the passenger seat side, and is constituted of: a center vent blowout part 31 (a driver seat's center vent blowout part 31a, a passenger seat's center vent blowout part 31b) that is provided close to the center in the width direction (the vehicle widthwise direction) ; and a side vent blowout part 32 (a driver seat's side vent blowout part 32a, a passenger seat's side vent blowout part 32b) that is provided adjacent to this center vent blowout part 31 and close to the sides in the width direction (the vehicle widthwise direction).

As illustrated in Fig. 2B, the defrost blowout part 20 is connected at its end part to a defrost connecting duct 23 that is designed to guide air to a defrost blowout grille (not illustrated) provided in an upper face of a dashboard of the vehicle, and has in its downstream end face a defrost opening 24 that is designed to deliver the air to the defrost connecting duct 23.

The center vent blowout part 31 is connected at its downstream end part to a center vent connecting duct 33 that is designed to guide air to a center vent blowout grille 51 provided close to the center of the dashboard of the vehicle in the vehicle widthwise direction, and has in its downstream end face (upper end face) a center vent opening 34 (a driver seat's center vent opening 34a, a passenger seat's center vent opening 34b) that is designed to deliver the air to the center vent connecting duct 33. In addition, the side vent blowout part 32 is connected at its downstream end part to a side vent connecting duct 35 that is designed to guide air to a side vent blowout grille 52 provided close to the sides of the dashboard in the vehicle widthwise direction, and has in its downstream end face (upper end face) a side vent opening 36 (a driver seat's side vent opening 36a, a passenger seat's side vent opening 36b) that is designed to deliver the air to the side vent connecting duct 35.

Thus, in the vent blowout part 30, the driver seat's side vent opening 36a, the driver seat's center vent opening 34a, the passenger seat' s center vent opening 34b, and the passenger seat's side vent opening 36b are aligned in this order in the width direction (the vehicle widthwise direction), a driver seat side division wall 37a is formed between the driver seat' s side vent opening 36a and the driver seat' s center vent opening 34a, a central division wall 37b is formed between the driver seat's center vent opening 34a and the passenger seat's center vent opening 34b, and a passenger seat side division wall 37c is formed between the passenger seat's center vent opening 34b and the passenger seat's side vent opening 36b.

Meanwhile, the foot blowout part 40 has no duct connected thereto in this example, and has in its end face (lower end face) a foot opening 41 that is designed to deliver air downward in the vehicle compartment.

In addition, the aperture of the defrost opening 24 is regulated by a defrost door 25 that is provided right before the defrost opening 24 so as to face this opening, and the aperture of the center vent opening 34 and the aperture of the side vent opening 36 are regulated by a vent door 60 that is provided right before the center vent opening 34 and the side vent opening 36 so as to face these openings. Further, the volume of air to be delivered from the foot opening 41 is regulated by a foot door 45 that is provided in the middle of the second blowout passage 7.

The defrost door 25 is constituted of: a rotary shaft 26 that is rotatably supported on the defrost blowout part 20 of the air conditioning case 2; and a defrost door' s platy part 27 that rotates together with the rotary shaft 26 and extends from the rotary shaft 26. In this example, the defrost door's platy part 27 is rotatable between: a position to come into contact with a seat wall 2a that extends obliquely downward from a part downstream of and above the evaporator 8; and a position to come into contact with a defrost-vent division wall 2b that is located between the defrost blowout part 20 and the vent blowout part 30.

The foot door 45 is constituted of: a rotary shaft 46 that is rotatably supported on the air conditioning case 2 at a position near a point where the second blowout passage 7 is connected to the mixing area 12; and foot door's platy parts 47a, 47b that extend in two different directions from the rotary shaft 46. In this example, the two foot door's platy parts 47a, 47b are secured on the rotary shaft 46 with a phase difference, which is an obtuse angle, in between, and are rotatable between: a fully-closed position where both of the foot door' s platy parts 47a, 47b come into contact with an inner face of a vehicle compartment side sidewall of the air conditioning case 2 and a partition wall 2c defining the second blowout passage 7 at the same time to close the second blowout passage 7; and a fully-open position where both of the foot door's platy parts 47a, 47b are substantially parallel with the second blowout passage 7.

### [First Embodiment]

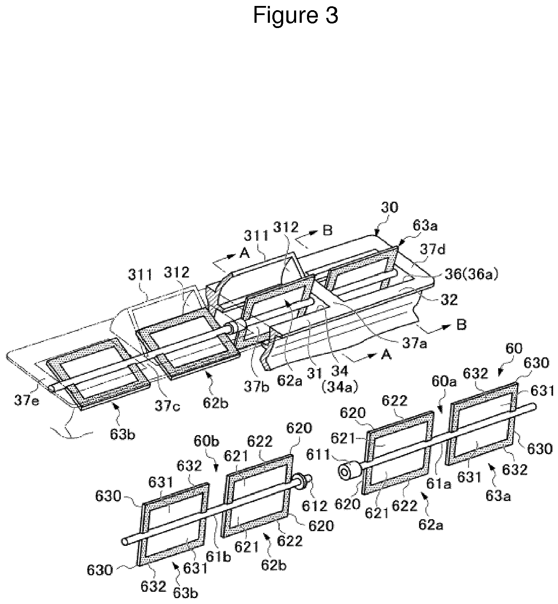

In this example, as illustrated in Fig. 3, the vent door 60 is provided in such a manner that a driver seat side vent door 60a and a passenger seat side vent door 60b are separately rotatable. The vent door 60a, 60b respectively have: rotary shafts 61a, 61b; center vent's opening and closing parts 62a, 62b that are each two platy parts extending in different radial directions from the rotary shaft 61a or 61b and that are designed to make the center vent opening 34 openable and closable; and side vent's opening and closing parts 63a, 63b that are each multiple platy parts extending in different radial directions from a portion of the rotary shaft 61a or 61b different from that where the center vent's opening and closing part 62a or 62b is formed and that are designed to make the side vent opening 36 openable and closable.

In this example, the driver seat side and passenger seat side center vent' s opening and closing parts 62a, 62b each have two platy parts 620 that extend from the rotary shaft 61a or 61b in radial directions different by 180°, and each of the platy parts 620 has: a platy and rectangular rigid part 621; and an elastic part 622 that is provided in edge parts of three sides of the rigid part 621 excluding a side thereof connected to the rotary shaft 61a or 61b.

In addition, the side vent's opening and closing parts 63a, 63b also each have two platy parts 630 that extend from the rotary shaft 61a or 61b in radial directions different by 180°, and each of the platy parts 630 has: a platy and rectangular rigid part 631; and an elastic part 632 that is provided in edge parts of three sides of the rigid part 631 excluding a side thereof connected to the rotary shaft 61a or 61b.

In this example, the radial directions where the multiple platy parts 620 of the center vent's opening and closing parts 62a, 62b extend coincide with the radial directions where the multiple platy parts 630 of the side vent' s opening and closing parts 63a, 63b extend.

The rotary shaft 61a of the driver seat side vent door 60a and the rotary shaft 61b of the passenger seat side vent door 60b are each rotatably supported on the air conditioning case 2 and are coupled together so as to be rotatable relative to each other.

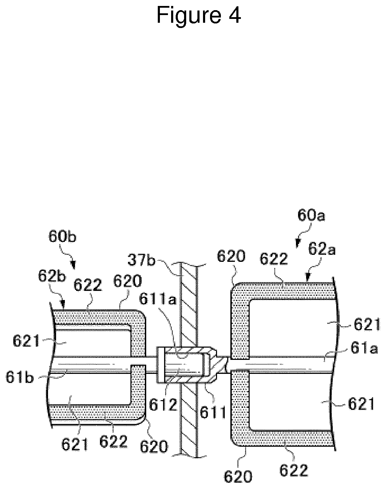

Specifically, the rotary shaft 61a of the driver seat side vent door 60a is rotatably supported on a sidewall 37d and the driver seat side division wall 37a of the vent blowout part 30 defining the driver seat side side vent opening 36 and, as illustrated in Fig. 4, an end part of the rotary shaft 61a coupled to the rotary shaft 61b of the
passenger seat side vent door 60b is increased in diameter and this diameter-increased part 611 is rotatably supported on the central division wall 37b.

Meanwhile, the rotary shaft 61b of the passenger seat side vent door 60b is rotatably supported on a sidewall 37e and the passenger seat side division wall 37c of the vent blowout part 30 defining the passenger seat side side vent opening 36 and, as illustrated in Fig. 4, an end part of the rotary shaft 61b opposed to the end part of the rotary shaft 61a of the driver seat side vent door 60a has an insertion part 612 that is designed to be rotatably inserted in an insertion hole 611a formed in the diameter-increased part 611 of the driver seat side vent door 60a and this insertion part 612 is rotatably supported on the central division wall 37b via the diameter-increased part 611.

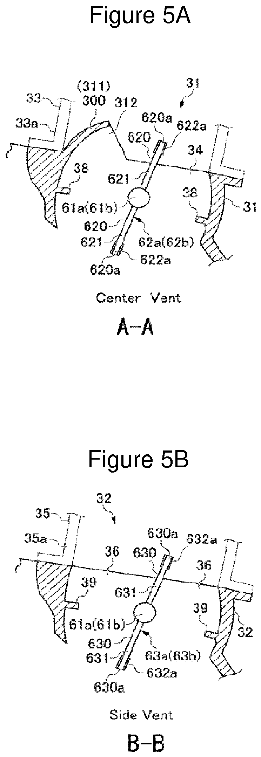

In such a configuration, as illustrated in Fig. 5A, the center vent blowout part 31 has a seat part 38 protruding therefrom on which a part of the elastic part 622 provided in the edge part of an end side 620a (the side of the platy part 620 which is the farthest from the rotary shaft 61a or 61b, which is to be described later) of the center vent's opening and closing part 62a (62b) is to be seated. In addition, as illustrated in Fig. 5B, the side vent blowout part 32 has a seat part 39 protruding therefrom on which a part of the elastic part 632 provided in the edge part of an end side 630a (the side of the platy part 630 which is the farthest from the rotary shaft 61a or 61b, which is to be described later) of the side vent's opening and closing part 63a (63b) is to be seated.

In addition, an edge part of the center vent opening 34 located at the downstream end of the center vent blowout part 31 has a vent air volume restriction wall 300 that is formed to curve along the rotation trajectory of the center vent's opening and closing parts 62a, 62b and designed to narrow down the gap between the center vent blowout part 31 and the center vent's opening and closing parts 62a, 62b across a predetermined turning area. In this example, the vent air volume restriction wall 300 is formed as a center vent's extension part 311 that extends along the rotation trajectory of each of the center vent's opening and closing parts 62a, 62b.

The center vent's extension part 311 is formed in such a way that the inner wall of the center vent blowout part 31 extends continuously, and is formed to curve so that it may leave a gap between the center vent blowout part 31 and the end side 620a of each of the center vent's opening and closing parts 62a, 62b which is small in size across the predetermined turning area. The small size in this embodiment is in a range from 1 millimeter to two millimeters, for example. In addition, it is preferable that a predetermined size is kept as the size of the gap across the predetermined turning area so that the working effect of air volume reduction to be described later may be achieved reliably. In addition, in this example, the center vent's extension part 311 is provided on its both side faces with sidewalls 312 that stand on the edge part of the center vent opening 34, and these sidewalls prevent a large volume of conditioned air from unintentionally flowing through the side faces of the center vent's opening and closing parts 62a, 62b when the end side 620a of each of the center vent's opening and closing parts 62a, 62b comes close to the center vent's extension part 311.

In addition, in this example, when a position at which each of the center vent's opening and closing parts 62a, 62b closes the center vent opening 34 is set as a rotation starting point, the center vent's extension part 311 is formed in the predetermined turning area located at an end phase of large rotation (leftward rotation in Figs. 5A and 5B in this embodiment) of the vent door from this closed position.

Here, the center vent connecting duct 33 is formed in such a shape that a connection end part 33a connected to the center vent blowout part 31 does not interfere with the center vent's extension part 311, and is formed so as not to impair airtightness when connected to the center vent blowout part 31.

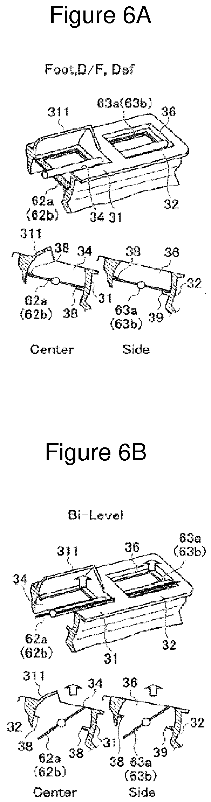

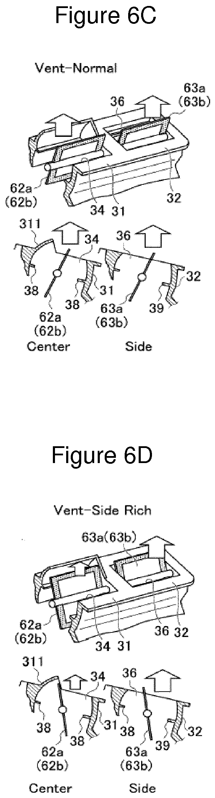

In the above configuration, with reference to Figs. 6A to 6D, a description is next given of how the ratio between the volume of air to blow out of the center vent opening 34 and the volume of air to blow out of the side vent opening 36 changes with a change in blowout mode.

First, in the foot blowout mode, the foot defrost blowout mode, and the defrost blowout mode, the center vent's opening and closing part 62a (62b) closes the center vent opening 34 by bringing the edge part (elastic part 622) of the end side 620a of the center vent's opening and closing part 62a (62b) into contact with the seat part 38, and the side vent' s opening and closing part 63a (63b) closes the side vent opening 36 by bringing the edge part (elastic part 632) of the end side 630a of the side vent's opening and closing part 63a (63b) into contact with the seat part 39 (see Fig. 6A). Accordingly, in this state, no air blows out of the center vent opening 34 (the center vent blowout part 31) and no air blows out of the side vent opening 36 (the side vent blowout part 32).

In the bi-level blowout mode, in a state where the foot door 45 is turned to a half-open position and the defrost door 25 is set at a closed position, the center vent opening 34 and the side vent opening 36 are set half open so that substantially the same volume of air may be delivered therefrom (see Fig. 6B). In such a state, while delivery of air from the foot blowout part 40 is kept, a small volume of air is delivered from the center vent opening 34 (the center vent blowout part 31) and the side vent opening 36 (the side vent blowout part 32) .

When the normal vent blowout mode is selected in order to allow cold air to reach the rear of the vehicle compartment and achieve a cooling effect early because the vehicle compartment needs to be cooled quickly, in a state where each of the foot door 45 and the defrost door 25 is set at a closed position, the center vent opening 34 and the side vent opening 36 are set at full open (see Fig. 6C). Specifically, the platy part 620 of each of the center vent's opening and closing parts 62a, 62b is turned until it becomes substantially perpendicular to the center vent opening 34, and the platy part 630 of the side vent's opening and closing part 63a (63b) is turned until it becomes substantially perpendicular to the side vent opening 36.

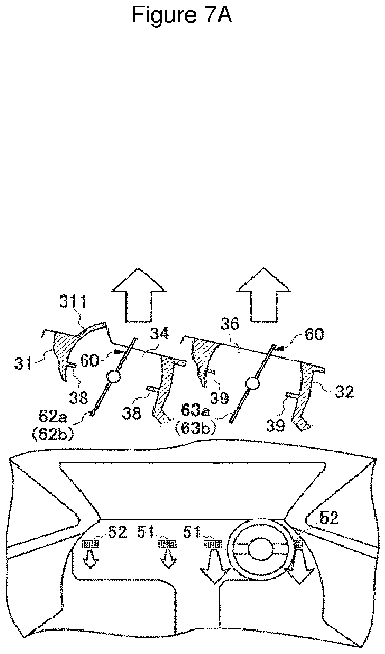

In such a state, the volume of air to blow out of the center vent opening 34 and the side vent opening 36 increases since the passage resistance at the center vent opening 34 and the passage resistance at the side vent opening 36 become the smallest. For this reason, if such a state is created only on the driver seat side, as illustrated in Fig. 7A, the volume of air to be delivered from the driver seat side center vent blowout grille 51 and the volume of air to be delivered from the driver seat side side vent blowout grill 52 are substantially the same and large.

If the incident angle of the sunshine shining into the vehicle compartment is small and the ratio of air to blow out of the sides of the vehicle compartment needs to increase, in a state where the foot door 45 and the defrost door 25 are set at a closed position, the vent door 60a on the side (the driver seat side, for example) onto which a large amount of sunshine shines is further turned until the end side 620a of the center vent's opening and closing part 62a comes close to the center vent's extension part 311. Thereby, the passage area of the center vent opening 34 is narrowed down and the volume of air to be delivered from this center vent opening 34 is decreased.

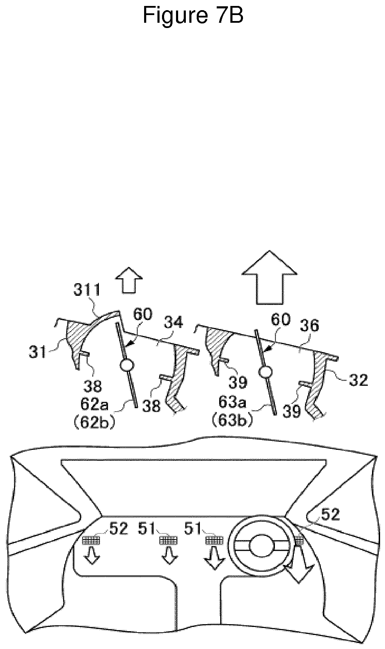

On the other hand, although the aperture of the side vent opening 36 becomes not the largest by the rotation of the side vent' s opening and closing parts 63a, 63b, there is no structure of largely restricting the air volume from this side vent opening, and therefore the volume of air to be delivered from this side vent opening is kept large. Thus, as illustrated in Fig. 7B, it is possible to increase the ratio of air to blow out of the side vent blowout grille 52 on the driver seat side onto which the sunshine shines, and thereby relieve the heat of the sunshine.

In this way, thanks to the center vent's extension part 311 provided on the edge part of the center vent opening 34 of the center vent blowout part 31, it is possible to change the ratio between the volume of air to be delivered from the center vent opening 34 (the center vent blowout part 31) and the volume of air to be delivered from the side vent opening 36 (the side vent blowout part 32) according to the position of each of the vent doors 60a, 60b while keeping air blow out of the center vent opening 34 and the side vent opening 36.

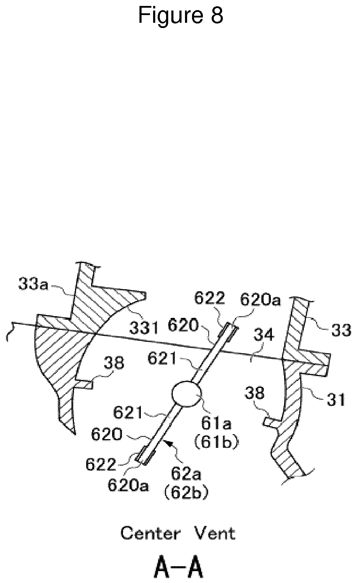

Note that, shown above is the example where the vent air volume restriction wall 300 that restricts the volume of air to be delivered from the center vent opening 34 is constituted of the center vent's extension part 311 that extends from the edge part of the center vent opening 34 along the rotation trajectory of each of the center vent's opening and closing parts 62a, 62b; instead, for the purpose of implementing the same function, as illustrated in Fig. 8, a center vent's curve wall 331 may be formed in an inner wall of the connection end part 33a of the center vent connecting duct 33, which is connected to the center vent blowout part 31, along the rotation trajectory of each of the center vent's opening and closing parts 62a, 62b. This center vent's curve wall 331 is formed in such a way that the inner wall of the connection end part 33a of the center vent connecting duct 33 bulges out inward so as to extend continuously from the inner wall of the center vent blowout part 31, and is formed to curve so that it may leave a gap between itself and the end side 620a of each of the center vent's opening and closing parts 62a, 62b which is small in size across the predetermined turning area.

By the above configuration, the same working effect as in the case where the center vent's extension part 311 is provided can be achieved. In addition, in the above configuration, the vent air volume restriction wall 300 (the center vent's curve wall 331) does not hinder the attachment of the center vent connecting duct 33 to the center vent blowout part 31, and therefore does not impair the workability in assembling the center vent connecting duct 33.

In addition, since the vent air volume restriction wall 300 is formed not in the air conditioning case 2 but in the center vent connecting duct 33 that guides air to the center vent blowout grille 51, it is possible to change the distribution of the volume of air to be guided to the center vent blowout grille 51 and the side vent blowout grille 52 by merely changing the center vent connecting duct 33.

### [Second Embodiment]

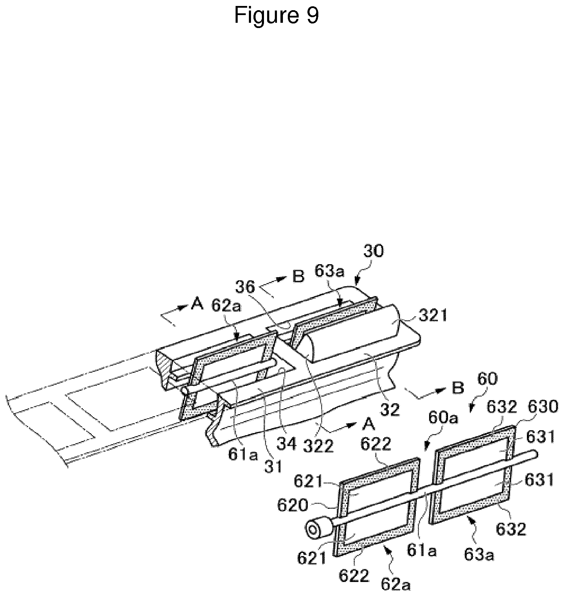

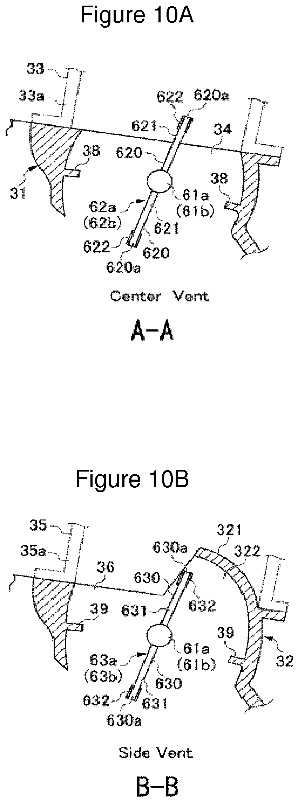

Fig. 9 and Figs. 10A and 10B illustrate another configuration example for regulating the ratio between the volume of air to be delivered from the center vent opening 34 and the volume of air to be delivered from the side vent opening 36.

In this example, instead of forming the center vent's extension part 311 on the circumferential edge of the center vent opening 34, a side vent's extension part 321 is provided to extend from the edge part of the side vent opening 36 along the rotation trajectory of each of the side vent's opening and closing parts 63a, 63b.

This side vent's extension part 321 is formed in such a way that the inner wall of the side vent blowout part 32 extends continuously, and is formed to curve so that it may leave a gap between itself and the end side 630a of each of the side vent's opening and closing parts 63a, 63b which is small in size across a predetermined turning area. In addition, in this example, the side vent's extension part 321 is provided on its both side faces with sidewalls 322 that stand on the edge part of the side vent opening 36, and these sidewalls prevent a large volume of conditioned air from unintentionally flowing through the side faces of the side vent's opening and closing parts 63a, 63b when the end side 630a of each of the side vent' s opening and closing parts 63a, 63b comes close to the side vent's extension part 321.

Here, the side vent connecting duct 35 is formed in such a shape that a connection end part 35a connected to the side vent blowout part 32 does not interfere with the side vent's extension part 321, and is formed so as not to impair airtightness when connected to the side vent blowout part 32.

In addition, in this example, the side vent's extension part 321 is provided in a turning area different from that of the center vent's extension part 311 of the first embodiment in the rotation direction of the side vent' s opening and closing parts 63a, 63b. Specifically, when a position at which each of the side vent's opening and closing parts 63a, 63b closes the side vent opening 36 is set as a rotation starting point, the side vent's extension part 321 is formed in the predetermined turning area located right after the side vent' s opening and closing parts 63a, 63b rotate (rotate leftward in Figs. 10A and 10B in this embodiment) from this closed position until the end side of each of the side vent' s opening and closing parts passes through the end face of the side vent opening 36.

Note that, other configurations are the same as those of the configuration example described above, and thus the same parts are assigned the same reference numerals and signs and their description is omitted.

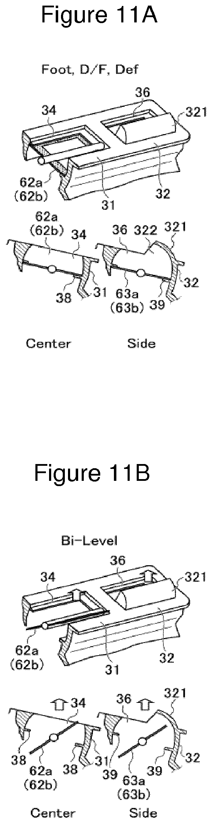

In the above configuration, with reference to Figs. 11A to 11D, a description is next given of how the ratio between the volume of air to blow out of the center vent opening 34 and the volume of air to blow out of the side vent opening 36 changes with a change in blowout mode.

First, in the foot blowout mode, the foot defrost blowout mode, and the defrost blowout mode, the center vent's opening and closing parts 62a, 62b each close the center vent opening 34 by bringing the edge part (elastic part 622) of the end side 620a of the center vent's opening and closing part 62a (62b) into contact with the seat part 38, and the side vent's opening and closing parts 63a, 63b each close the side vent opening 36 by bringing the edge part (elastic part 632) of the end side 630a of the side vent's opening and closing part 63a or 63b into contact with the seat part 39. Accordingly, in this state, no air blows out of the center vent opening 34 (the center vent blowout part 31) and no air blows out of the side vent opening 36 (the side vent blowout part 32) (see Fig. 11A).

In the bi-level blowout mode, in a state where the foot door 45 is turned to a half-open position and the defrost door 25 is set at a closed position, the center vent opening 34 and the side vent opening 36 are set half open so that substantially the same volume of air may be delivered therefrom by turning the center vent's opening and closing parts 62a, 62b and the side vent's opening and closing parts 63a, 63b. In such a state, while delivery of air from the foot blowout part 40 is kept, a small volume of air is delivered from the center vent opening 34 (the center vent blowout part 31) and the side vent opening 36 (the side vent blowout part 32) (see Fig. 11B).

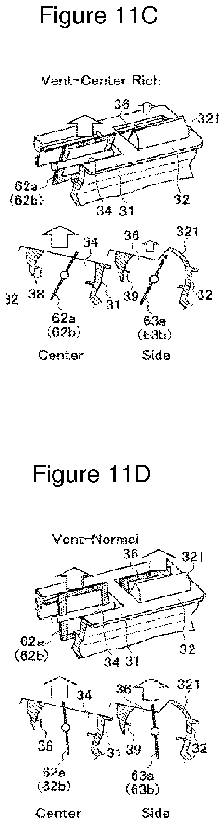

When the normal vent blowout mode is selected in order to allow cold air to reach the rear of the vehicle compartment and achieve a cooling effect early because the vehicle compartment needs to be cooled quickly, in a state where each of the foot door 45 and the defrost door 25 is set at a closed position, each of the center vent's opening and closing parts 62a, 62b is turned until it becomes substantially perpendicular to the center vent opening 34, and each of the side vent's opening and closing parts 63a, 63b is turned until it becomes substantially perpendicular to the side vent opening 36 (see Fig. 11C).

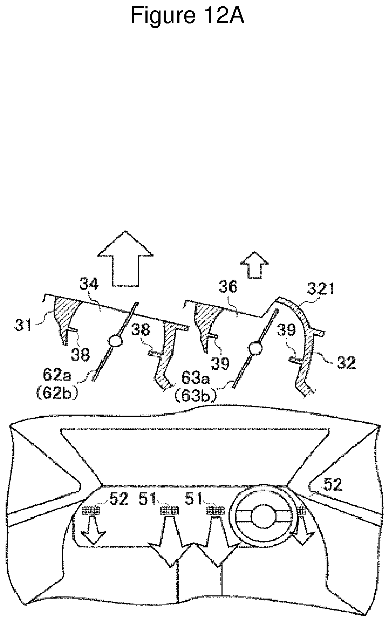

In this state, the center vent opening 34 is set in a fully open state; however, the end side 630a of each of the side vent's opening and closing parts 63a, 63b still faces the side vent's extension part 321, and thus the passage area of the side vent opening 36 is kept narrowed by the side vent's opening and closing parts 63a, 63b. Accordingly, as illustrated in Fig. 12A, it is possible to increase the ratio of the volume of air to blow out of the center vent blowout grille 51 while reducing the volume of air to blow out of the side vent blowout grille 52, and thereby allow cold air to reach the rear of the vehicle compartment and cool the vehicle compartment quickly.

If quick cooling becomes less necessary and the vehicle compartment needs to be cooled uniformly in the lateral direction, in a state where the foot door 45 and the defrost door 25 are set at a closed position, the vent door 60a on the side (the driver seat side, for example) onto which a large amount of sunshine shines is further turned until the end side of the side vent' s opening and closing part 63a deviates largely from the side vent's extension part 321 (see Fig. 11D).

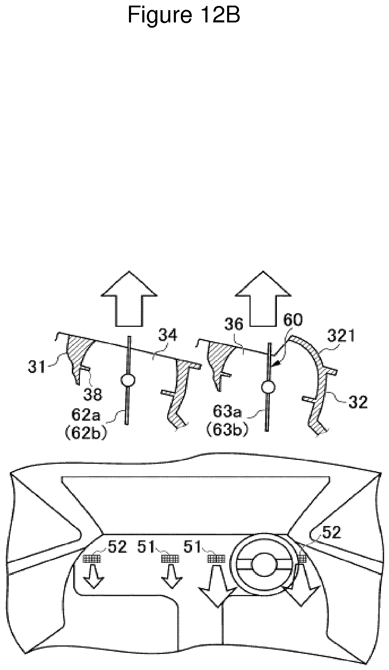

Thereby, the passage area of the side vent opening 36 having been narrowed down is increased, thus making it possible to increase the volume of air to be delivered from the side vent opening 36. Accordingly, as illustrated in Fig. 12B, it is possible to increase the volume of air to be delivered from the center vent blowout grille 51 on the driver seat side and the volume of air to be delivered from the side vent blowout grille 52 on the driver seat side at the same time, and thereby cool the vehicle compartment uniformly in the lateral direction.

In this way, thanks to the side vent's extension part 321 provided on the edge part of the side vent opening 36 of the side vent blowout part 32, it is possible to change the ratio between the volume of air to be delivered from the center vent opening 34 (the center vent blowout part 31) and the volume of air to be delivered from the side vent opening 36 (the side vent blowout part 32) according to the position of the vent door 60 while keeping air blow out of the center vent opening 34 and the side vent opening 36.

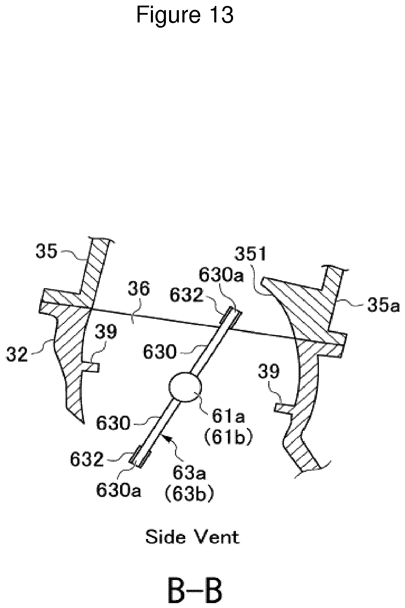

Note that, shown above is the example where the vent air volume restriction wall 300 that restricts the volume of air to be delivered from the side vent opening 36 is constituted of the side vent's extension part 321 that extends from the edge part of the side vent opening 36 along the rotation trajectory of each of the side vent' s opening and closing parts 63a, 63b; instead, for the purpose of implementing the same function, as illustrated in Fig. 13, a side vent's curve wall 351 may be formed in an inner wall of the connection end part 35a of the side vent connecting duct 35, which is connected to the side vent blowout part 32, along the rotation trajectory of each of the side vent's opening and closing parts 63a, 63b. This side vent's curve wall 351 is formed in such a way that the inner wall of the connection end part 35a of the side vent connecting duct 35 bulges out inward so as to extend continuously from the inner wall of the side vent blowout part 32, and is formed to curve so that it may leave a gap between itself and the end side 630a of each of the side vent's opening and closing parts 63a, 63b which is small in size across the predetermined turning area.

By the above configuration, the same working effect as in the case where the side vent' s extension part 321 is provided can be achieved. In addition, in the above configuration, the vent air volume restriction wall 300 (the side vent's curve wall 351) does not hinder the attachment of the side vent connecting duct 35 to the side vent blowout part 32, and therefore does not impair the workability in assembling the side vent connecting duct 35.

In addition, since the vent air volume restriction wall 300 is formed not in the air conditioning case 2 but in the side vent connecting duct 35 that guides air to the side vent blowout grille 52, it is possible to change the distribution of the volume of air to be guided to the center vent blowout grille 51 and the side vent blowout grille 52 by merely changing the side vent connecting duct 35.

### [Third Embodiment]

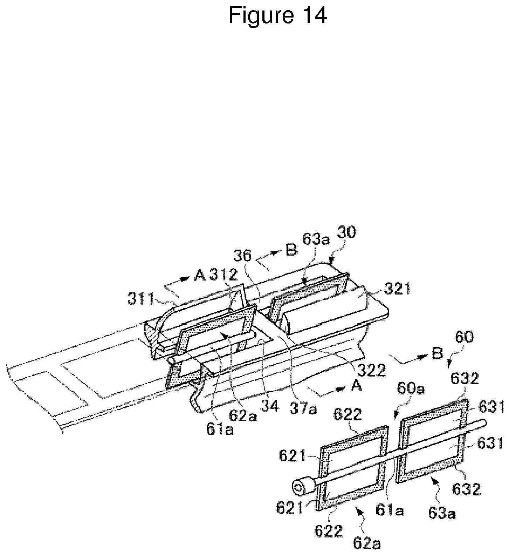

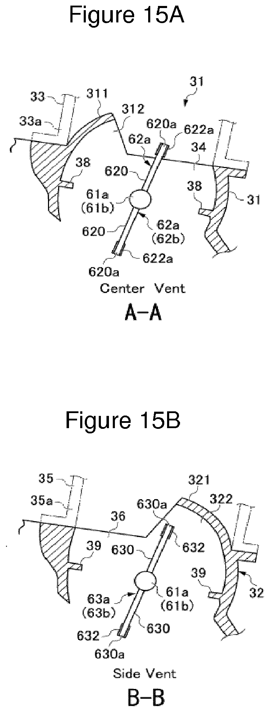

Fig. 14 and Figs. 15A and 15B illustrate another configuration example for regulating the ratio between the volume of air to be delivered from the center vent opening 34 and the volume of air to be delivered from the side vent opening 36.

In this example, the center vent's extension part 311 extends from the edge part of the center vent opening 34 along the rotation trajectory of each of the center vent's opening and closing parts 62a, 62b, and the side vent's extension part 321 extends from the edge part of the side vent opening 36 along the rotation trajectory of each of the side vent's opening and closing parts 63a, 63b.

Here, the configuration of the center vent's extension part 311 is the same as the configuration of the first embodiment, and the configuration of the side vent's extension part 321 is the same as the configuration of the second embodiment. Accordingly, the center vent' s extension part 311 and the side vent's extension part 321 are arranged in the different turning areas in the rotation direction of the rotary shafts 61a, 61b. In this example, in a case where, in the whole turning area of the vent door 60, a position at which the edge part of the end side of each opening and closing part comes into contact with the corresponding seat part 38 or 39 and closes the corresponding opening is set as a rotation starting point and where a turning area located after the vent door rotates (rotates leftward in Figs. 15A and 15B in this embodiment) from this closed position and the end side of its opening and closing part moves away from the inner wall of the blowout part (the end side of its opening and closing part passes through the end face of the opening) is divided into an initial area, a middle area, and a final area along the rotation direction, the center vent's extension part 311 is provided so as to face the end side 620a of each of the center vent's opening and closing parts 62a, 62b in the final area, while the side vent's extension part 321 is provided so as to face the end side 630a of each of the side vent's opening and closing parts 63a, 63b in the initial area.

Other configurations are the same as those of the first and second embodiments, and thus the same parts are assigned the same reference numerals and signs and their description is omitted.

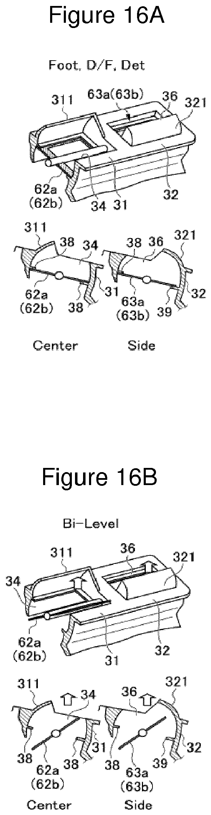

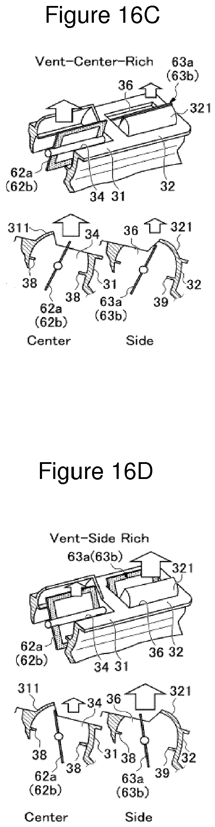

In the above configuration, with reference to Figs. 16A to 16D, a description is next given of how the ratio between the volume of air to blow out of the center vent opening 34 and the volume of air to blow out of the side vent opening 36 changes with a change in blowout mode.

First, in the foot blowout mode, the foot defrost blowout mode, and the defrost blowout mode, the center vent's opening and closing part 62a (62b) closes the center vent opening 34 by bringing the edge part (elastic part 622) of the end side 620a of the center vent's opening and closing part 62a (62b) into contact with the seat part 38, and the side vent' s opening and closing part 63a (63b) closes the side vent opening 36 by bringing the edge part (elastic part 632) of the end side 630a of the side vent's opening and closing part 63a (63b) into contact with the seat part 39 (see Fig. 16A). Accordingly, in this state, no air blows out of the center vent opening 34 (the center vent blowout part 31) and no air blows out of the side vent opening 36 (the side vent blowout part 32).

In the bi-level blowout mode, in a state where the foot door 45 is turned to a half-open position and the defrost door 25 is set at a closed position, as illustrated in Fig. 16B, the center vent opening 34 and the side vent opening 36 are set half open so that substantially the same volume of air may be delivered therefrom. In such a state, while delivery of air from the foot blowout part 40 is kept, a small volume of air is delivered from the center vent opening 34 (the center vent blowout part 31) and the side vent opening 36 (the side vent blowout part 32).

When the normal vent blowout mode is selected in order to allow cold air to reach the rear of the vehicle compartment and achieve a cooling effect early because the vehicle compartment needs to be cooled quickly, in a state where each of the foot door 45 and the defrost door 25 is set at a closed position, as illustrated in Fig. 16C, each of the center vent's opening and closing parts 62a, 62b is turned until it becomes substantially perpendicular to the center vent opening 34, and each of the side vent's opening and closing parts 63a, 63b is turned until it becomes substantially perpendicular to the side vent opening 36.

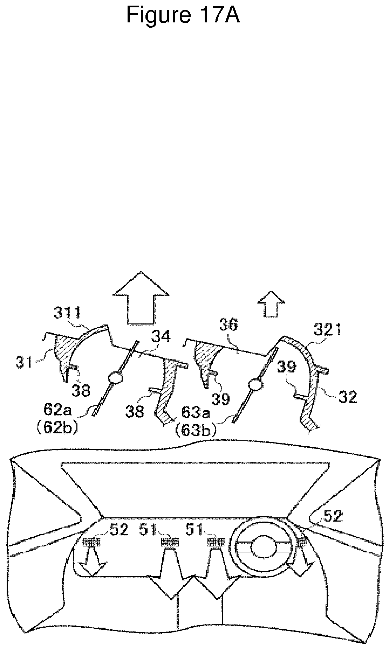

In such a state, the passage resistance at the center vent opening 34 becomes the smallest, and thus the volume of air to blow out of the center vent opening increases. On the other hand, the end side of each of the side vent's opening and closing parts 63a, 63b still faces the side vent' s extension part 321, and thus the passage area of the side vent opening 36 is kept narrowed by the side vent' s opening and closing parts 63a, 63b. Accordingly, as illustrated in Fig. 17A, it is possible to increase the ratio of the volume of air to blow out of the center vent blowout grille 51 while reducing the volume of air to blow out of the side vent blowout grille 52, and thereby allow cold air to reach the rear of the vehicle compartment and cool the vehicle compartment quickly.

If the incident angle of the sunshine shining into the vehicle compartment is small and the ratio of air to blow out of the sides of the vehicle compartment needs to increase, in a state where the foot door 45 and the defrost door 25 are set at a closed position, the center vent's opening and closing part 62a on the side (the driver seat side, for example) onto which a large amount of sunshine shines is further turned until its end side comes close to the center vent's extension part 311.

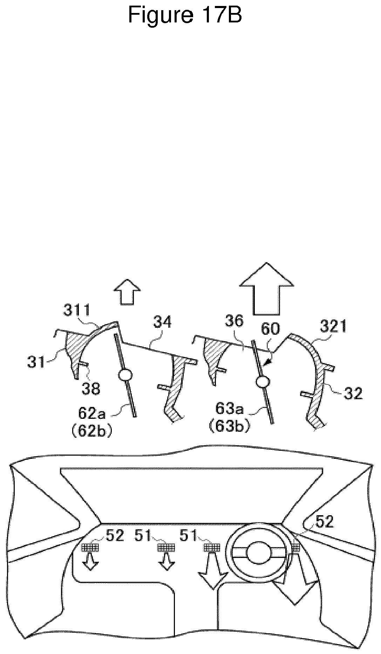

Thereby, since the end side of the center vent's opening and closing part 62a comes close to the center vent' s extension part 311, the passage area of the center vent opening 34 is narrowed down, making it possible to decrease the volume of air to be delivered from this center vent opening 34. In contrast, since the end side of the side vent's opening and closing part 63a deviates largely from the side vent's extension part 321, the passage area of the side vent opening 36 is increased, and thus the volume of air to blow out of the side vent opening 36 increases. Accordingly, as illustrated in Fig. 17B, it is possible to increase the ratio of the volume of air to blow out of the side vent blowout grille 52 on the driver seat side while reducing the volume of air to blow out of the center vent blowout grille 51 on the driver seat side, and thereby ease hotness due to the sunshine on the driver seat side.

Note that, while not illustrated, if quick cooling becomes less necessary and the vehicle compartment needs to be cooled uniformly in the lateral direction, in a state where the foot door 45 and the defrost door 25 are set at a closed position, the center vent's opening and closing part 62a and the side vent's opening and closing part 63a are set at a position in the middle area of the turning area. This makes conditioned air blow out of the center vent opening 34 and the side vent opening 36 with their passage areas not narrowed down, thus making it possible to cool the driver seat uniformly in the lateral direction.

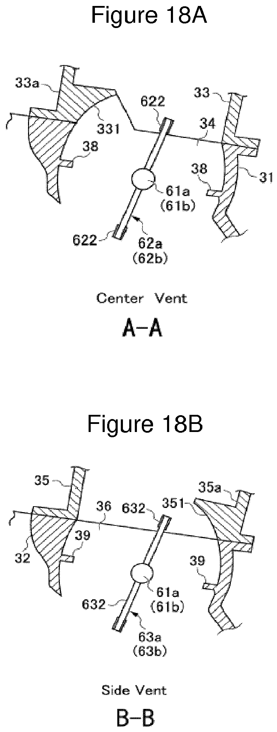

Note that, shown above is the example where the vent air volume restriction wall 300 that restricts the volume of air to be delivered from the center vent opening 34 is constituted of the center vent's extension part 311 that extends from the edge part of the center vent opening 34 along the rotation trajectory of each of the center vent's opening and closing parts 62a, 62b and where the vent air volume restriction wall 300 that restricts the volume of air to be delivered from the side vent opening 36 is constituted of the side vent's extension part 321 that extends from the edge part of the side vent opening 36 along the rotation trajectory of each of the side vent's opening and closing parts 63a, 63b; instead, for the purpose of implementing the same function, as illustrated in Figs. 18A and 18B, the center vent's curve wall 331 may be formed in the inner wall of the connection end part 33a of the center vent connecting duct 33, which is connected to the center vent blowout part 31, along the rotation trajectory of each of the center vent's opening and closing parts 62a, 62b, and the side vent's curve wall 351 may be formed in the inner wall of the connection end part 35a of the side vent connecting duct 35, which is connected to the side vent blowout part 32, along the rotation trajectory of each of the side vent's opening and closing parts 63a, 63b.

The center vent's curve wall 331 is formed in such a way that the inner wall of the connection end part 33a of the center vent connecting duct 33 bulges out inward so as to extend continuously from the inner wall of the center vent blowout part 31, and is formed to curve so that it may leave a gap between itself and the end side 620a of each of the center vent' s opening and closing parts 62a, 62b which is small in size across the predetermined turning area. In addition, the side vent's curve wall 351 is formed in such a way that the inner wall of the connection end part 35a of the side vent connecting duct 35 bulges out inward so as to extend continuously from the inner wall of the side vent blowout part 32, and is formed to curve so that it may leave a gap between itself and the end side 630a of each of the side vent's opening and closing parts 63a, 63b which is small in size across the predetermined turning area.

By the above configuration, the same working effect as in the case where the center vent's extension part 311 and the side vent's extension part 321 are provided can be achieved. Further, in the above configuration, the vent air volume restriction wall 300 (the center vent's curve wall 331, the side vent's curve wall 351) does not hinder the attachment of the center vent connecting duct 33 to the center vent blowout part 31 and the attachment of the side vent connecting duct 35 to the side vent blowout part 32, and therefore does not impair the workability in assembling the center vent connecting duct 33 and the side vent connecting duct 35.

In addition, since the vent air volume restriction wall 300 is formed not in the air conditioning case 2 but in the center vent connecting duct 33 that guides air to the center vent blowout grille 51 and in the side vent connecting duct 35 that guides air to the side vent blowout grille 52, it is possible to change the distribution of the volume of air to be guided to the center vent blowout grille 51 and the side vent blowout grille 52 by merely changing the center vent connecting duct 33 and the side vent connecting duct 35.

### [Fourth Embodiment]

In the above configuration, the vent air volume restriction wall 300 (the center vent's extension part 311, the side vent's extension part 321, the center vent's curve wall 331, the side vent's curve wall 351) that is formed to curve along the rotation trajectory of the opening and closing part (the center vent's opening and closing parts 62a, 62b, the side vent' s opening and closing parts 63a, 63b) and designed to narrow down the gap between itself and the opening and closing part across the predetermined turning area is provided in at least one of: the downstream end of the center vent blowout part 31 or the connection end part 33a of the center vent connecting duct 33 which is connected to the center vent blowout part 31; and the downstream end of the side vent blowout part 32 or the connection end part 35a of the side vent connecting duct 35 which is connected to the side vent blowout part 32 in order to change the ratio between the volume of air to be delivered from the center vent opening 34 and the volume of air to be delivered from the side vent opening 36. Instead, the air volume ratio may be changed without forming the vent air volume restriction wall in the blowout part or the blowout duct.

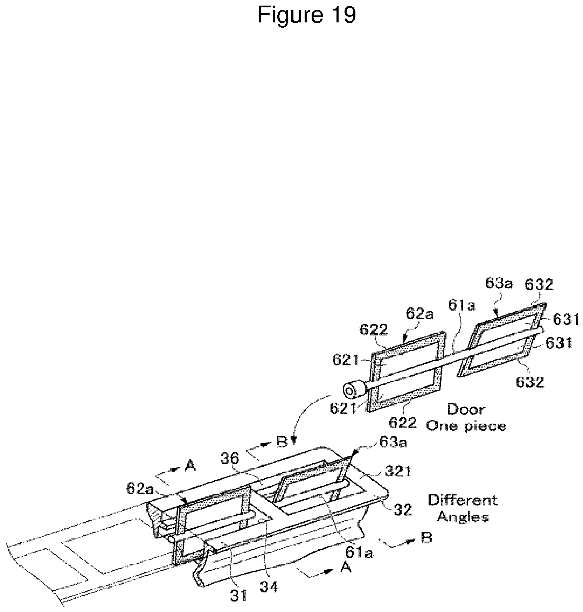

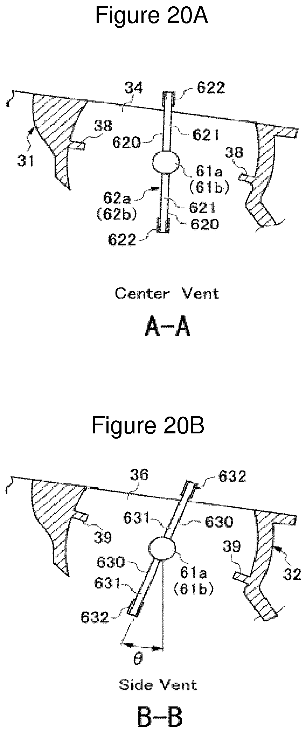

Figs. 19 and 20 illustrate the above example. In this example, instead of providing the vent air volume restriction wall, the center vent's opening and closing parts 62a, 62b and the side vent's opening and closing parts 63a, 63b extend in different radial directions.

Each of the opening and closing parts is constituted of the two platy parts 620 or 630 that extend in directions different by 180° with respect to the rotary shaft 61a or 61b, and the direction in which the center vent' s opening and closing parts 62a, 62b extend from the rotary shafts 61a, 61b and the direction in which the side vent's opening and closing parts 63a, 63b extend from the rotary shafts 61a, 61b are different by a predetermined angle (θ) which is set in advance. In other words, the turning area at which the volume of air to be delivered from the center vent opening 34 becomes the largest and the turning area at which the volume of air to be delivered from the side vent opening 36 becomes the largest with the turning of the vent door 60 are different from each other.

In addition, in this example, in a case where a position at which the edge part of the end side of each opening and closing part comes into contact with the corresponding seat part 38 or 39 and closes the corresponding opening is set as a rotation starting point and where the opening and closing part turns in a direction to open the opening (rotates leftward in Figs. 20A and 20B in this example) from this point, the turning area at which the volume of air to blow out of the side vent opening 36 becomes the largest comes later than the turning area at which the volume of air to blow out of the center vent opening 34 becomes the largest.

Note that, other configurations are the same as those of the configuration example described above, and thus the same parts are assigned the same reference numerals and signs and their description is omitted.

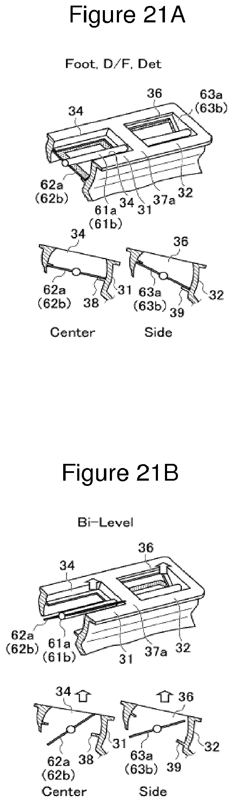

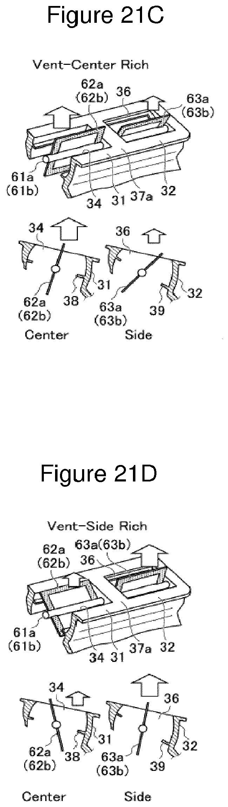

In the above configuration, with reference to Figs. 21A to 21D, a description is next given of how the ratio between the volume of air to blow out of the center vent opening 34 and the volume of air to blow out of the side vent opening 36 changes with a change in blowout mode.

First, in the foot blowout mode, the foot defrost blowout mode, and the defrost blowout mode, the center vent's opening and closing part 62a (62b) closes the center vent opening 34 by bringing the edge part (elastic part 622) of the end side 620a of the center vent's opening and closing part 62a (62b) into contact with the seat part 38, and the side vent's opening and closing part 63a (63b) closes the side vent opening 36 by bringing the edge part (elastic part 632) of the end side 630a of the side vent's opening and closing part 63a (63b) into contact with the seat part 39 (see Fig. 21A). Accordingly, in this state, no air blows out of the center vent opening 34 (the center vent blowout part 31) and no air blows out of the side vent opening 36 (the side vent blowout part 32).

In the bi-level blowout mode, in a state where the foot door is turned to a half-open position and the defrost door is set at a closed position, the center vent opening 34 and the side vent opening 36 are set half open so that substantially the same volume of air may be delivered therefrom (see Fig. 21B). In such a state, while delivery of air from the foot blowout part 40 is kept, a small volume of air is delivered from the center vent opening 34 (the center vent blowout part 31) and the side vent opening 36 (the side vent blowout part 32) .

When the normal vent blowout mode is selected in order to allow cold air to reach the rear of the vehicle compartment and achieve a cooling effect early because the vehicle compartment needs to be cooled quickly, in a state where each of the foot door 45 and the defrost door 25 is set at a closed position, each of the center vent's opening and closing parts 62a, 62b is turned until it becomes substantially perpendicular to the center vent opening 34 (see Fig. 21C).

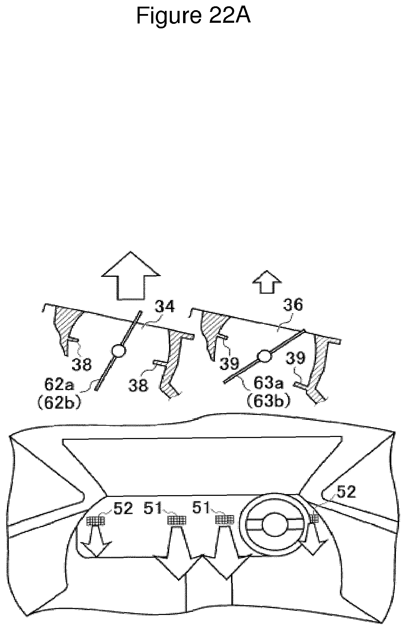

In such a state, the volume of air to blow out of the center vent opening 34 increases since the passage resistance at the center vent opening 34 becomes the smallest. On the other hand, since the platy part 630 of each of the side vent's opening and closing parts 63a, 63b is located behind the platy part 620 of each of the center vent' s opening and closing parts 62a, 62b by the predetermined phase angle (θ), each of the side vent's opening and closing parts 63a, 63b is still located at such a position as to narrow down the aperture of the side vent opening 36. Accordingly, as illustrated in Fig. 22A, it is possible to increase the ratio of the volume of air to blow out of the center vent blowout grille 51 while reducing the volume of air to blow out of the side vent blowout grille 52, and thereby allow cold air to reach the rear of the vehicle compartment and cool the vehicle compartment quickly.

If the incident angle of the sunshine shining into the vehicle compartment is small and the ratio of air to blow out of the sides of the vehicle compartment needs to increase, in a state where the foot door and the defrost door are set at a closed position, the vent door on the side (the driver seat side, for example) onto which a large amount of sunshine shines is turned to such a position that each of the center vent's opening and closing parts 62a, 62b narrows down the center vent opening 34.

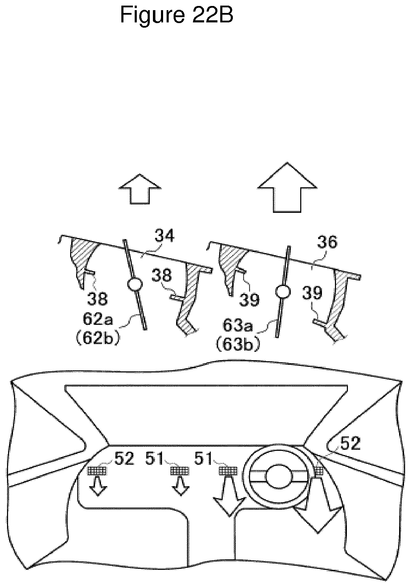

Thereby, the passage area of the center vent opening 34 is narrowed down, making it possible to decrease the volume of air to be delivered from this center vent opening. In contrast, since the platy part 630 of each of the side vent's opening and closing parts 63a, 63b is located behind the platy part 620 of each of the center vent' s opening and closing parts 62a, 62b by the predetermined phase angle (θ), the passage area of the side vent opening 36 is increased, and thus the volume of air to blow out of the side vent opening 36 increases. Accordingly, as illustrated in Fig. 22B, it is possible to increase the ratio of the volume of air to blow out of the side vent blowout grille 52 while reducing the volume of air to blow out of the center vent blowout grille 51, and thereby ease hotness due to the sunshine.

Meanwhile, while not illustrated, if quick cooling becomes less necessary and the vehicle compartment needs to be cooled uniformly in the lateral direction, in a state where the foot door 45 and the defrost door 25 are set at a closed position, the center vent's opening and closing part 62a and the side vent's opening and closing part 63a are rotated leftward from the rotation position in Fig. 22A by about half of the predetermined phase angle (θ). This makes substantially the same volume of conditioned air blow out of the passage area of the center vent opening 34 and the side vent opening 36, thus making it possible to cool the driver seat uniformly in the lateral direction.

In this way, it is also possible to change the ratio between the volume of air to be delivered from the center vent opening and the volume of air to be delivered from the side vent opening with the turning of the vent door by making the center vent's opening and closing parts 62a, 62b and the side vent's opening and closing parts 63a, 63b extend in the different radial directions.

### [Fifth Embodiment]

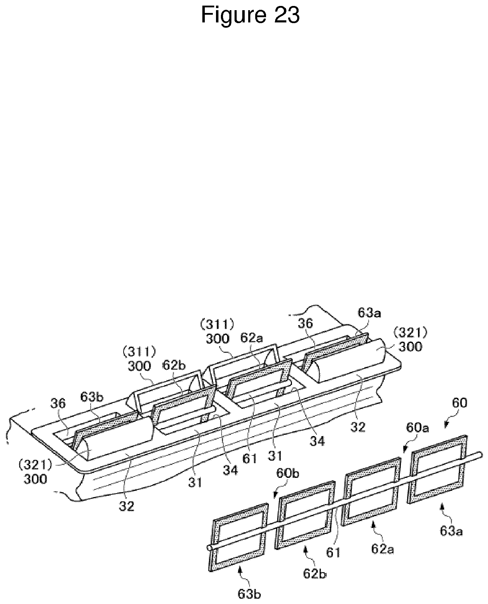

Shown in the above configuration is the example where the turning of the vent door 60a that regulates the apertures of the center vent opening 34 and the side vent opening 36 on the driver seat side and the turning of the vent door 60b that regulates the apertures of the center vent opening 34 and the side vent opening 36 on the passenger seat side can be controlled separately; instead, as illustrated in Figs. 23 to 26, it is also possible to control the turning of the vent door 60a on the driver seat side and the turning of the vent door 60b on the passenger seat side at the same time by using one shared rotary shaft 61 as the rotary shaft on which the center vent' s opening and closing part 62a and the side vent' s opening and closing part 63a on the driver seat side are arranged and as the rotary shaft on which the center vent's opening and closing part 62b and the side vent's opening and closing part 63b on the passenger seat side are arranged. With such a configuration, it is possible to regulate the distribution of the volume of air to be delivered from the center vent opening 34 on each of the driver seat side and the passenger seat side and the volume of air to be delivered from the side vent opening 36 on each of the driver seat side and the passenger seat side at the same time using one vent door.

Such a vent door may be embodied in such a manner that, as illustrated in Fig. 23, the center vent' s opening and closing parts 62a, 62b and the side vent's opening and closing parts 63a, 63b extend in the same radial direction, and the vent air volume restriction wall 300 that is formed to curve along the rotation trajectory of the opening and closing part 62a, 62b, 63a, or 63b and designed to narrow down the gap between itself and the corresponding opening and closing part across the predetermined turning area is provided in at least one of: the downstream end of the center vent blowout part 31 or the connection end part 33a of the center vent connecting duct 33 which is connected to the center vent blowout part 31; and the downstream end of the side vent blowout part 32 or the connection end part 35a of the side vent connecting duct 35 which is connected to the side vent blowout part 32 (Fig. 23 illustrates an example where the vent air volume restriction wall 300 (the center vent's extension part 311, the side vent's extension part 321) is provided on both of the downstream end of the center vent blowout part 31 and the downstream end of the side vent blowout part on both driver seat and passenger seat sides).

Note that, the shape of each vent air volume restriction wall 300 and other configurations are the same as those of the configuration of Figs. 14 and 15, and thus their description is omitted.

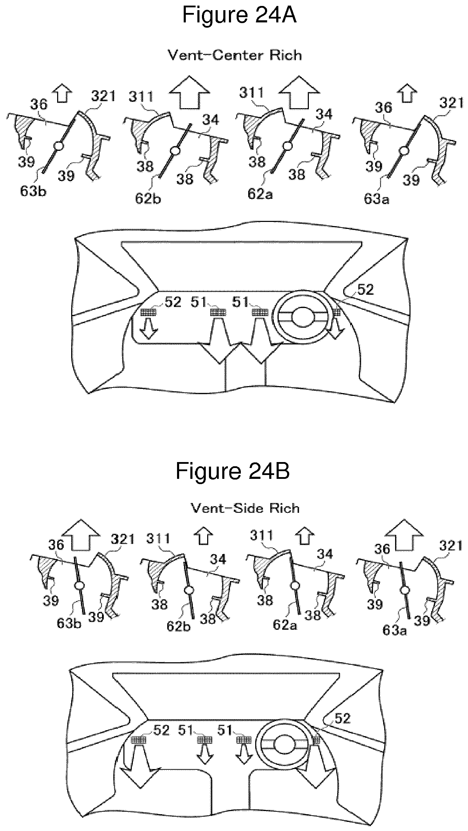

In the above configuration, when the normal vent blowout mode is selected in order to allow cold air to reach the rear of the vehicle compartment and achieve a cooling effect early because the vehicle compartment needs to be cooled quickly, as illustrated in Fig. 24A, each of the center vent's opening and closing parts 62a, 62b is turned until it becomes substantially perpendicular to the center vent opening 34, and each of the side vent's opening and closing parts 63a, 63b is turned until it becomes substantially perpendicular to the side vent opening 36.

In such a state, the passage resistance at the center vent opening 34 becomes the smallest, and thus the volume of air to blow out of the center vent opening increases. On the other hand, the end side of each of the side vent's opening and closing parts 63a, 63b is still in the state of coming close to the side vent's extension part 321, and thus the passage area of the side vent opening 36 is kept narrowed. Accordingly, it is possible to increase the ratio of the volume of air to blow out of the center vent blowout grille 51 while reducing the volume of air to blow out of the side vent blowout grille 52, and thereby satisfy the request to cool the vehicle compartment quickly.

Meanwhile, if the incident angle of the sunshine shining into the vehicle compartment is small and the ratio of air to blow out of the sides of the vehicle compartment needs to increase, as illustrated in Fig. 24B, the vent door is further turned until the end side of the center vent's opening and closing part 62a comes close to the center vent's extension part 311.

Thereby, since the end side of the center vent's opening and closing part 62a comes close to the center vent' s extension part 311, the passage area of the center vent opening 34 is narrowed down, making it possible to decrease the volume of air to be delivered from this center vent opening 34. In contrast, since the end side of the side vent's opening and closing part 63a deviates largely from the side vent's extension part 321, the passage area of the side vent opening 36 is increased, and thus the volume of air to blow out of the side vent opening 36 increases. Accordingly, it is possible to increase the ratio of the volume of air to blow out of the side vent blowout grille 52 while reducing the volume of air to blow out of the center vent blowout grille 51, and thereby ease hotness due to the sunshine.

### [Sixth Embodiment]

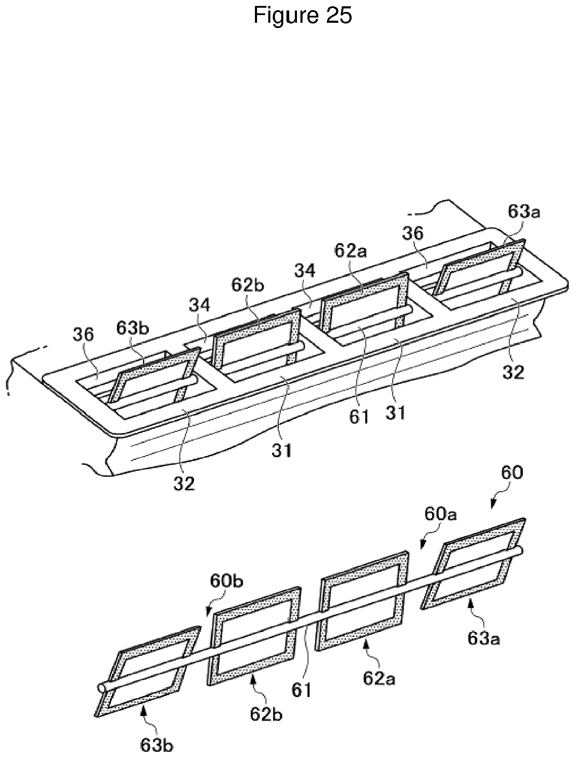

Meanwhile, as another embodiment of regulating the distribution of the volume of air to be delivered from the center vent opening 34 on each of the driver seat side and the passenger seat side and the volume of air to be delivered from the side vent opening 36 on each of the driver seat side and the passenger seat side at the same time using one vent door, as illustrated in Fig. 25, the center vent's opening and closing parts 62a, 62b and the side vent's opening and closing parts 63a, 63b may extend in different radial directions on each of the driver seat and passenger seat sides. Here, in this example, the center vent's opening and closing part 62a on the driver seat side and the center vent's opening and closing part 62b on the passenger seat side extend in the same radial direction, and the side vent's opening and closing part 63a on the driver seat side and the side vent's opening and closing part 63b on the passenger seat side extend in the same radial direction. Other configurations are the same as those of the configuration of Figs. 19 and 20, and thus their description is omitted.

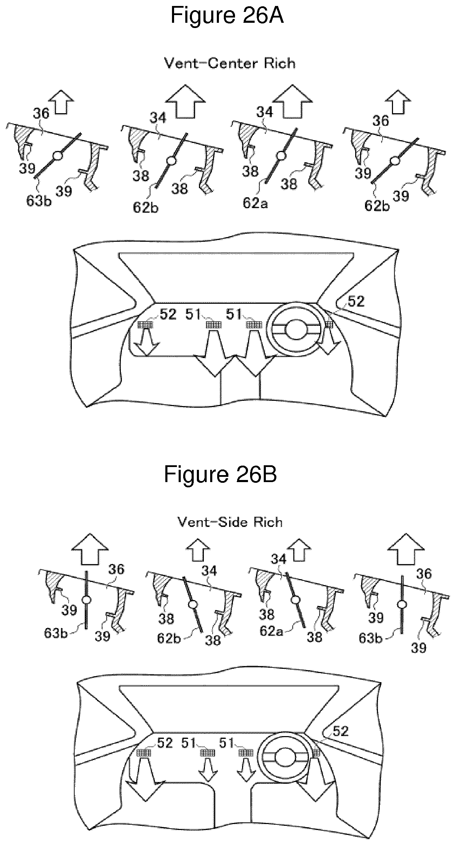

In the above configuration, when the normal vent blowout mode is selected in order to allow cold air to reach the rear of the vehicle compartment and achieve a cooling effect early because the vehicle compartment needs to be cooled quickly, as illustrated in Fig. 26A, the vent door is turned until the center vent opening 34 becomes a fully open state.

Thereby, the volume of air to be delivered from the center vent opening 34 increases since the passage resistance at the center vent opening 34 becomes the smallest. On the other hand, since the platy part 630 of each of the side vent's opening and closing parts 63a, 63b is located behind the platy part 620 of each of the center vent's opening and closing parts 62a, 62b by the predetermined phase angle (**θ**), each of the side vent's opening and closing parts 63a, 63b is still located at such a position as to narrow down the aperture of the side vent opening 36.

Accordingly, it is possible to increase the ratio of the volume of air to blow out of the center vent blowout grille 51 while reducing the volume of air to blow out of the side vent blowout grille 52, and thereby satisfy the request to cool the vehicle compartment quickly.

If the incident angle of the sunshine shining into the vehicle compartment is small and the ratio of air to blow out of the sides of the vehicle compartment needs to increase, as illustrated in Fig. 26B, the vent door is turned until the side vent opening 36 becomes a fully open state.

Thereby, the volume of air to be delivered from the side vent opening 36 increases since the passage resistance at the side vent opening 36 becomes the smallest. On the other hand, since the platy part 620 of each of the center vent's opening and closing parts 62a, 62b is located ahead of the platy part 630 of each of the side vent's opening and closing parts 63a, 63b by the predetermined phase angle (θ), each of the center vent's opening and closing parts 62a, 62b is still located at such a position as to narrow down the aperture of the center vent opening 34, and thus the volume of air to be delivered from the center vent opening 34 decreases. Accordingly, it is possible to increase the ratio of the volume of air to blow out of the side vent blowout grille 52 while reducing the volume of air to blow out of the center vent blowout grille 51, and thereby ease hotness due to the sunshine.

In this way, by employing the configuration of the fifth or sixth embodiment, it is possible to regulate the ratio of the volume of air to be delivered from the center vent opening 34 on each of the driver seat and passenger seat sides and the volume of air to be delivered from the side vent opening 36 on each of the driver seat and passenger seat sides at the same time even when the center vent's opening and closing part 62a and the side vent's opening and closing part 63a on the driver seat side and the center vent's opening and closing part 62b and the side vent's opening and closing part 63b on the passenger seat side are arranged on one rotary shaft 61.

### [Other Embodiments]

Although the description has been given thus far of the case where, in the vent door 60, the center vent's opening and closing parts 62a, 62b each have the two platy parts 620 that extend from the rotary shaft 61a or 61b in the radial directions different by 180°, and the side vent's opening and closing parts 63a, 63b each have the two platy parts 630 that extend from the rotary shaft 61a or 61b in the radial directions different by 180°, the present invention is not limited thereto. For example, the vent door 60 may be formed so that any set of, or both sets of, the directions in which the two platy parts 620 of each center vent's opening and closing part extend and the directions in which the two platy parts 630 of each side vent' s opening and closing part extend may form an obtuse angle. This extension angle is selected as appropriate according to conditions such as the air flow resistance.

### Description of Reference Numerals and Signs

- 1:: air conditioning unit
- 2:: air conditioning case
- 3:: air flow passage
- 8:: evaporator
- 9:: heater core
- 11:: mix door
- 51:: center vent blowout grille
- 52:: side vent blowout grille
- 34:: center vent opening
- 33:: center vent connecting duct
- 33a:: connection end part
- 35:: side vent connecting duct
- 35a:: connection end part
- 36:: side vent opening
- 31:: center vent blowout part
- 32:: side vent blowout part
- 60:: vent door
- 60a:: driver seat side vent door
- 60b:: passenger seat side vent door
- 61, 61a, 61b:: rotary shaft
- 62a, 62b:: center vent's opening and closing part
- 63a, 63b:: side vent's opening and closing part
- 620, 630:: platy part
- 620a, 630a:: end side
- 300:: vent air volume restriction wall
- 311:: center vent's extension part
- 321:: side vent's extension part
- 331:: center vent's curve wall
- 351:: side vent's curve wall

## Claims

1. An air conditioning system for a vehicle including:
an air conditioning case (2) in which an air flow passage (3) is formed;
a temperature adjustment unit (8, 9, 11) which is disposed in the air conditioning case (2) and configured to adjust a temperature of air introduced into the air conditioning case;
a center vent blowout part (31) which is disposed downstream of the temperature adjustment unit (8, 9, 11), which is connected to a center vent connecting duct (33) that is designed to guide air to a center vent blowout grille (51) provided close to the center in a vehicle widthwise direction, and in which a center vent opening (34) that is designed to deliver air to the center vent connecting duct (33) is formed;
a side vent blowout part (32) which is adjacent to the center vent blowout part (31), which is connected to a side vent connecting duct (35) that is designed to guide air to a side vent blowout grille (52) provided close to sides in the vehicle widthwise direction, and in which a side vent opening (36) that is designed to deliver air to the side vent connecting duct (35) is formed; and
a vent door (60) which is supported in the air conditioning case (2) in such a manner as to be capable of opening and closing the center vent opening (34) and the side vent opening (36), the air conditioning system for a vehicle being **characterized in that**
the vent door (60) includes:
a rotary shaft (61, 61a, 61b) which is pivotally supported in the air conditioning case (2);
a center vent' s opening and closing part (62a, 62b) which is constituted of a plurality of platy parts that extend in different radial directions from the rotary shaft and which is designed to be capable of opening and closing the center vent opening (34); and
a side vent's opening and closing part (63a, 63b) which is constituted of a plurality of platy parts that extend in different radial directions from a portion of the rotary shaft (61, 61a, 61b) different from that where the center vent's opening and closing part (62a, 62b) is formed and which is designed to be capable of opening and closing the side vent opening (36), and,
in at least one of: a downstream end of the center vent blowout part (31) or a connection end part (33a) of the center vent connecting duct (33) which is connected to the center vent blowout part (31); and a downstream end of the side vent blowout part (32) or a connection end part (35a) of the side vent connecting duct (35) which is connected to the side vent blowout part (32), a vent air volume restriction wall (300) which is formed to curve along a rotation trajectory of the corresponding opening and closing part (62a, 62b, 63a, 63b) and designed to narrow down a gap between itself and the opening and closing part (62a, 62b, 63a, 63b) across a predetermined turning area is provided.

2. The air conditioning system for a vehicle according to claim 1, **characterized in that** the vent air volume restriction wall (300) is constituted of at least one of: a center vent's extension part (311) which extends along the rotation trajectory of the center vent's opening and closing part (62a, 62b) from an edge part of the center vent opening (34) located at the downstream end of the center vent blowout part (31); and a side vent's extension part (321) which extends along the rotation trajectory of the side vent's opening and closing part (63a, 63b) from an edge part of the side vent opening (36) located at the downstream end of the side vent blowout part (32).

3. The air conditioning system for a vehicle according to claim 2, **characterized in that**, in the case where the center vent's extension part (311) and the side vent's extension part (321) are arranged, the center vent's extension part (311) and the side vent's extension part (321) are arranged in different turning areas in a rotation direction of the rotary shaft (61, 61a, 61b).

4. The air conditioning system for a vehicle according to claim 1, **characterized in that** the vent air volume restriction wall (300) is constituted of at least one of: a center vent's curve wall (331) which is formed in an inner wall of the connection end part (33a) of the center vent connecting duct (33), which is connected to the center vent blowout part (31), along the rotation trajectory of the center vent's opening and closing part (62a, 62b); and a side vent's curve wall (351) which is formed in an inner wall of the connection end part (35a) of the side vent connecting duct (35), which is connected to the side vent blowout part (32), along the rotation trajectory of the side vent' s opening and closing part (63a, 63b).

5. The air conditioning system for a vehicle according to claim 4, **characterized in that** in the case where the center vent's curve wall (331) and the side vent's curve wall (351) are arranged, the center vent's curve wall (331) and the side vent's curve wall (351) are arranged in different turning areas in a rotation direction of the rotary shaft (61, 61a, 61b).

6. An air conditioning system for a vehicle including:
an air conditioning case (2) in which an air flow passage (3) is formed;
a temperature adjustment unit (8, 9, 11) which is disposed in the air conditioning case (2) and configured to adjust a temperature of air introduced into the air conditioning case;
a center vent blowout part (31) which is disposed downstream of the temperature adjustment unit (8, 9, 11), which is connected to a center vent connecting duct (33) that is designed to guide air to a center vent blowout grille (51) provided close to the center in a vehicle widthwise direction, and in which a center vent opening (34) that is designed to deliver air to the center vent connecting duct (33) is formed;
a side vent blowout part (32) which is adjacent to the center vent blowout part (31), which is connected to a side vent connecting duct (35) that is designed to guide air to a side vent blowout grille (52) provided close to sides in the vehicle widthwise direction, and in which a side vent opening (36) that is designed to deliver air to the side vent connecting duct (35) is formed; and
a vent door (60) which is supported in the air conditioning case (2) in such a manner as to be capable of opening and closing the center vent opening (34) and the side vent opening (36), the air conditioning system for a vehicle being **characterized in that**
the vent door (60) includes:
a rotary shaft (61, 61a, 61b) which is pivotally supported in the air conditioning case (2);
a center vent' s opening and closing part (62a, 62b) which is constituted of a plurality of platy parts that extend in different radial directions from the rotary shaft (61, 61a, 61b) and which is designed to be capable of opening and closing the center vent opening (34); and
a side vent's opening and closing part (63a, 63b) which is constituted of a plurality of platy parts that extend in different radial directions from a portion of the rotary shaft (61, 61a, 61b) different from that where the center vent's opening and closing part (62a, 62b) is formed and which is designed to be capable of opening and closing the side vent opening (36), and
the center vent's opening and closing part (62a, 62b) and the side vent's opening and closing part (63a, 63b) extend in different radial directions.

7. The air conditioning system for a vehicle according to any one of claims 1 to 6, **characterized in that** a plurality of the center vent's opening and closing parts (62a, 62b) and a plurality of the side vent's opening and closing parts (63a, 63b) are each constituted of two platy parts (620, 630) which extend in directions different by 180° with respect to the rotary shaft (61, 61a, 61b).

8. The air conditioning system for a vehicle according to any one of claims 1 to 7, **characterized in that**
the center vent blowout part (31) is constituted of a driver seat's center vent blowout part (31a) which is designed to deliver air to blow toward an area of a driver seat's side space of a vehicle compartment close to the center in the vehicle compartment, and
the side vent blowout part (32) is constituted of a driver seat' s side vent blowout part (32a) which is designed to deliver air to blow toward an area of the driver seat's side space close to the sides in the vehicle compartment.

9. The air conditioning system for a vehicle according to any one of claims 1 to 7, **characterized in that**
the center vent blowout part (31) is constituted of a passenger seat's center vent blowout part (31b) which is designed to deliver air to blow toward an area of a passenger seat's side space of a vehicle compartment close to the center in the vehicle compartment, and
the side vent blowout part (32) is constituted of a passenger seat's side vent blowout part (32b) which is designed to deliver air to blow toward an area of the passenger seat's side space close to the sides in the vehicle compartment.

10. The air conditioning system for a vehicle according to any one of claims 1 to 7, **characterized in that**
the center vent blowout part (31) is constituted of: a driver seat's center vent blowout part (31a) which is designed to deliver air to blow toward an area of a driver seat's side space of a vehicle compartment close to the center in the vehicle compartment; and a passenger seat' s center vent blowout part (31b) which is designed to deliver air to blow toward an area of a passenger seat's side space of the vehicle compartment close to the center in the vehicle compartment, and
the side vent blowout part (32) is constituted of: a driver seat's side vent blowout part (32a) which is designed to deliver air to blow toward an area of the driver seat' s side space close to the sides in the vehicle compartment; and a passenger seat' s side vent blowout part (32b) which is designed to deliver air to blow toward an area of the passenger seat's side space close to the sides in the vehicle compartment.
